# EUROPÄISCHE PATENTSCHRIFT

(11) **EP 4 381 212 B1**
(45) Veröffentlichungstag und Bekanntmachung des Hinweises auf die Patenterteilung: **22.07.2026**
(21) Anmeldenummer: 22758500.7
(22) Anmeldetag: 29.07.2022
(51) Int. Cl.: F16K 47/04, F16K 47/06, F16K 47/08, B33Y 80/00

(54) **DROSSELKANAL, DROSSELKÖRPER, VENTILKÄFIG UND STELLVENTIL**
THROTTLE CHANNEL, THROTTLE BODY, VALVE CAGE AND CONTROL VALVE
CANAL D'ÉTRANGLEMENT, CORPS D'ÉTRANGLEMENT, CAGE DE VANNE ET VANNE DE RÉGULATION

(30) Priorität: 06.08.2021 DE 102021120551
(43) Veröffentlichungstag der Anmeldung: 12.06.2024
(73) Patentinhaber: Samson Aktiengesellschaft, 60314 Frankfurt am Main (DE)
(72) Erfinder: ECKHOLZ, Holger, 65611 Brechen (DE)
(74) Vertreter: Schmid, Nils T.F.
(86) Internationale Anmeldenummer: PCT/EP2022/071439
(87) Internationale Veröffentlichungsnummer: WO 2023/012071

(56) Entgegenhaltungen:
- DE-A1- 102018 209 166
- DE-U1- 202021 102 939
- US-A1- 2017 234 440
- US-A1- 2019 353 265
- US-A1- 2021 108 739

## Beschreibung

Die Erfindung betrifft einen Drosselkörper zum Reduzieren des Fluiddrucks, insbesondere an einem Stellventil, einer prozesstechnischen Anlage, wobei der Drosselkörper vorzugsweise zum Anordnen in einer Prozessfluidleitung vorgesehen sein kann. Die Erfindung betrifft weiterhin einen Ventilkäfig oder einen oder Ventilkolben für ein Stellventil zum Anordnen in einer Prozessfluidleitung einer prozesstechnischen Anlage wie auch ein Stellventil zum Anordnen in einer Prozessfluidleitung.

In der Prozesstechnik ist es für zahlreiche Anwendungen erforderlich, den Druck eines Prozessfluids in einer Prozessfluidleitung zu reduzieren. Zu diesem Zweck können Drosselkörper mit darin vorgesehenen Drosselkanälen, mit denen eine Druckreduktion von Kanaleingang zu Kanalausgang eingestellt wird, vorgesehen werden. Häufig kommen Drosselkörper im Zusammenhang mit Stellventilen zum Einsatz, beispielsweise in Form von Ventilkäfigen oder Ventilkolben. Ventilkäfige sind im Allgemeinen hülsenförmig und können in einem Stellventil derart angeordnet sein, dass sie ein Ventilglied, beispielsweise einen Stellkolben, länglich umgeben, wobei der Stellkolben innerhalb des Ventilkäfigs entlang einer koaxialen Hubachse verfahrbar ist, sodass verschieden große Öffnungsweiten mit dem Stellventil einstellbar sind. Ventilkolben können als Lochkegel mit einer hülsenförmigen Umfangswand und einer tellerförmigen Basis gebildet sein.

Konventionelle Druckreduktions-Ventilkäfige werden, wie in DE 10 2016 125 100 A1 beschrieben, oftmals durch eine Vielzahl von Scheiben gebildet, die in Richtung der Hubachse aufeinandergestapelt sind. Die Strömungskanäle in diesen Drosselkörpern werden im Allgemeinen durch Fräsmuster in den Scheiben realisiert. Aus ökonomischen Gründen haben diese gefrästen Kanäle in der Flussrichtung betrachtet im Allgemeinen eine rechteckige Gestalt entsprechend den durch die Fräse gebildeten Furchen.

Gemäß einer anderen Bauweise können Ventilkäfige in einem Stück gebildet und in einer Radialrichtung von Bohrungen durchdrungen sein. Für große Stellventil-Öffnungsweiten können größere, beispielsweise gefräste, Öffnungsfenster vorgesehen sein. Einen solchen Ventilkäfig beschreibt DE 10 2015 016 902 A1.

US 2017/234440 A1 betrifft einen Steuerzylinder für ein Steuerventil, wobei der Steuerzylinder einen Hauptkörper mit Durchgangsöffnungen umfasst. Zur Optimierung der Strömung und zur Reduzierung der Kavitation weisen die Durchgangsöffnungen eine Innenwand mit gekrümmtem, schrägem oder konischem Profil und/oder mit Kanten und/oder Hinterschneidungen auf.

US 2019/353265 A1 betrifft einen Ventilkäfig eines Steuerventils umfasst einen zylindrischen Körper mit einem ersten Ring, einem zweiten Ring gegenüber dem ersten Ring, einer Außenwand, einer Innenwand und einem Innenabschnitt, der sich radial zwischen der Innenwand und der Außenwand erstreckt und sich axial zwischen dem ersten Ring und dem zweiten Ring erstreckt.

DE 10 2018 209 166 A1 betrifft eine Armatur mit einem Absperrkörper, wobei der Absperrkörper ein Element aufweist, das mit einer Mehrzahl von Löchern, die von einem Medium durchströmt werden, versehen ist. Die Strömungsquerschnittsflächen variieren innerhalb der Löcher.

US 2021/108739 A1 betrifft ein Ventil zum Regulieren eines Fluidstroms, das ein Gehäuse umfasst, das einen Fluideinlass und einen Fluidauslass definiert. Ein Strömungssteuerelement ist innerhalb des Gehäuses angeordnet und so konfiguriert, dass es Energie in einem vom Fluideinlass zum Fluidauslass durchströmenden Fluid ableitet. Ein Ventilsitz ist innerhalb des Gehäuses positioniert und umfasst eine Vielzahl von Wirbelgeneratoren, die Wirbel in der Flüssigkeit erzeugen, wenn die Flüssigkeit durch den Ventilsitz fließt. Ein Stopfen ist innerhalb des Gehäuses angeordnet und relativ dazu zwischen einer geschlossenen und einer offenen Position beweglich. Der Stopfen bewegt sich vom Ventilsitz weg, wenn sich der Stopfen von der geschlossenen Position in Richtung der offenen Position bewegt, so dass der Fluidfluss durch das Durchflusssteuerelement und den Ventilsitz zunimmt, wenn der Stopfen von der geschlossenen Position in die offene Position bewegt wird.

DE 20 2021 102 939 U1 betrifft ein Drosselelement zur Druckreduzierung eines Prozessfluides, umfassend einen vom Prozessfluid zu durchströmender, mehrere Drosselkanäle aufweisender Drosselkörper, wobei jeder Drosselkanal in Strömungsrichtung S betrachtet eine stromaufwärtige Eintrittsöffnung, einen Kanalabschnitt und eine stromabwärtige Austrittsöffnung aufweist, wobei die Eintrittsöffnungen einen sich in Strömungsrichtung S verjüngenden kegelstumpfförmigen Einlassbereich und einen sich daran anschließenden sphärischen Bereich aufweisend ausgebildet sind.

Für Anwendungen, bei denen eine besonders hohe Druckdifferenz zwischen Ein- und Ausgang des Drosselkörpers vorgesehen ist, können alternativ Drosselkörper vorgesehen sein, bei denen die Kanalgeometrie durch ein generatives Herstellungsverfahren des die Kanäle umgebenden Drosselkörpers gebildet sind. Auf diese Weise können beispielsweise raumspiralförmige Drosselkanäle gebildet sein, mit denen sich in einer kurzen Drosselkörper-Breite große Druckreduktionen einstellen lassen. Ein solcher Drosselkörper ist aus EP 3 693 645 A1 bekannt.

Ein alternatives Konzept sieht vor, dass ein Ventilkäfig mit Drosselkanälen ausgestattet sein kann, die einen vielfach gestuften und ggf. verästelten Verlauf haben, mit zahlreichen Querschnittssprüngen entlang des Drosselkanal-Verlaufs, wobei kein spiralförmiger Kanalquerschnitt, sondern ein sparrenförmiger Kanalquerschnitt vorgesehen ist.

Eine große technische Herausforderung bei Drosselkörpern liegt in der Beherrschung der bei der Druckreduktion auftretenden physikalischen Effekte. Abhängig von der Druckdifferenz zwischen Eingangsseite und Ausgangsseite und dem konkreten Prozessfluid, welches unter Umständen mehrphasig sein kann oder infolge von insbesondere schlagartigen Druckänderungen mehrphasig werden kann, liegt das Ziel darin, Geräuschbildung sowie Abrasions-, Erosions- und Kavitationserscheinungen zu beherrschen. Gleichzeitig müssen die Drosselkörper ökonomischen Anforderungen sowohl im Hinblick auf Anschaffungskosten als auch in Bezug auf die Gesamtlebenszeit einer prozesstechnischen Anlage genügen. Insbesondere Drosselkörper mit verwinkelten, insbesondere eckigen, Kanalquerschnitten und/oder -geometrien haben sich als besonders anfällig für Kavitations-, Erosions- und Abrasionserscheinungen gezeigt. Demgegenüber zeigen rundliche Kanalgeometrien, die beispielsweise gebohrt oder additiv gefertigt sein können, erhebliche Vorteile.

Es besteht daher der Wunsch, Drosselkörper, Ventilkäfige. Ventilkolben und/oder Stellventile bereitzustellen, mit denen anwendungsgerecht, insbesondere besonders große, Druckdifferenzen, bevorzugt entlang einer stabilen Kennlinie variabel und stabil sowohl für sehr große Durchflüsse als auch für sehr geringe Durchflüsse einstellbar sind, wobei insbesondere, bevorzugt im Hinblick auf Anschaffungs- und/oder Lebenszeitkosten, eine kostengünstige Lösung realisiert sein soll.

Diese Aufgabe lösen die Gegenstände der unabhängigen Ansprüche.

Demnach ist ein Drosselkanal für einen Drosselkörper vorgesehen, der zum Reduzieren des Fluiddrucks einer prozesstechnischen Anlage, wie einer chemischen Anlage, insbesondere einer petrochemischen Anlage, einem Kraftwerk, einer Brauerei oder dergleichen, ausgelegt und eingerichtet ist. Insbesondere ist der Drosselkanal für einen Drosselkörper zum Reduzieren des Fluiddrucks an einem Stellventil vorgesehen, vorzugsweise zum Anordnen in einer Prozessfluidleitung einer prozesstechnischen Anlage. Der Drosselkörper ist schichtweise additiv in einer Aufbaurichtung A gebildet.

Der Drosselkanal umfasst einen sich von einem stromaufwärtigen Drosselkanaleintritt zu einem stromabwärtigen Drosselkanalaustritt erstreckenden Drosselkanalverlauf. Der Drosselkanal ist dadurch gekennzeichnet, dass er einen insbesondere kontinuierlichen und/oder konstanten Drosselkanalquerschnitt aufweist. Der Drosselkanalquerschnitt weist einen Giebelbogen und wenigstens eine an den Giebelbogen unmittelbar anschließende Überhangfläche auf. Der Überhangwinkel überschreitet einen Winkelschwellwert von höchstens 75° nicht. Der Drosselkanal hat eine Drosselkanalbreite quer zur Aufbaurichtung, insbesondere senkrecht zur Aufbaurichtung A. Der Giebelbogen definiert eine Bogenweite im Bereich von 5% bis 30%, insbesondere 10% bis 20%, vorzugsweise etwa 15%, d.h. 15% ± 2%, der Drosselkanalbreite. Vorzugsweise ist der Drosselkanal in Bezug auf die Aufbaurichtung spiegelsymmetrisch gestaltet. Überraschenderweise hat sich gezeigt, dass Drosselkanäle mit einem Drosselkanalquerschnitt, der eine Drosselkanalbreite definiert, wobei sich von einer in Querrichtung in Bezug auf die Aufbaurichtung im breitesten Bereich wenigstens eine Überhangfläche mit einem Überhangwinkel zu einem Giebelbogen erstreckt, der kleiner ist als die Drosselbreite, eine besonders günstige Kanalgeometrie sowohl im Hinblick auf die Strömungseigenschaften von Prozessfluiden als auch hinsichtlich der Herstellung des Drosselkanals realisieren lässt.

Gemäß einer bevorzugten Ausführung eines Drosselkanals kann die Bogenweite im Bereich 0,1 mm bis 5 mm liegen, insbesondere im Bereich von 0,15 mm bis 4 mm, vorzugweise im Bereich von 0,5 mm bis 2 mm. Es hat sich gezeigt, dass bei geringeren Bogenweiten oder gar Kanalgeometrien mit Spitzen, beispielsweise sparrenförmig gestaltetem Kanalquerschnitt, die Spitzen-Bereiche einen hohen Herstellungsaufwand bedingen und gleichzeitig besonders verschleißanfällig sind.

Bei einer Ausführungsform eines Drosselkanals ist der Winkelschwellenwert größer als 45°, insbesondere größer als 50°, vorzugsweise größer als 60°. Der Winkelschwellenwert kann in Bezug auf die Aufbaurichtung in einer Querschnittsebene senkrecht zur Flussrichtung bestimmt werden und insbesondere in einem Bereich zwischen wenigstens 45° und nicht mehr als 75° eingestellt sein. Dieser Bereich hat sich im Hinblick auf eine präzise und wirtschaftliche Herstellbarkeit in der gewünschten Kanalgeometrie mit guten Strömungseigenschaften als besonders geeignet erwiesen.

Gemäß einer Ausführung, die mit den vorigen kombinierbar ist, beträgt die Drosselkanalbreite wenigstens 0,5 mm, insbesondere wenigstens 1 mm, vorzugsweise wenigstens 2 mm, und/oder nicht mehr als 50 mm, insbesondere nicht mehr als 30 mm, vorzugsweise nicht mehr als 20 mm. Es ist denkbar, dass für einen Drosselkörper mehrere Drosselkanäle, insbesondere alle Drosselkanäle, dieselbe Drosselkanalbreite aufweisen. Die Drosselkanalbreite kann in einem Kanalquerschnitt quer zu einer Strömungsrichtung und quer zur Aufbaurichtung, insbesondere orthogonal zur Aufbaurichtung, bestimmt werden. Die Drosselkanalbreite beschreibt die größte Querschnittsbreite eines Drosselkanals von einer Stelle entlang seines Verlaufs vom Drosselkanaleintritt zum Drosselkanalaustritt. Die Drosselkanalbreite kann beispielsweise am Drosselkanaleintritt bestimmt sein. Alternativ kann die Drosselkanalbreite am Drosselkanalaustritt bestimmt sein. Alternativ kann die Drosselkanalbreite an einem insbesondere genau mittig gelegenen Punkt zwischen Drosselkanaleintritt und Drosselkanalaustritt bestimmt werden. Es kann bevorzugt sein, dass die Drosselkanalbreite entlang des Verlaufs vom Drosselkanaleintritt zum Drosselkanalaustritt im Wesentlichen gleich groß bleibt, insbesondere genau gleich groß bleibt. Die Drosselkanalbreite kann als maßgeblich im Hinblick auf den größten Strömungsquerschnitt eines Drosselkanals angesehen werden. Indem der Drosselkanal im vorgenannten Bereich eingestellt wird, lassen sich besonders gute Strömungseigenschaften einstellen, insbesondere für kritische Fluide.

Bei einer Ausführung eines Drosselkanals ist eine zur Überhangfläche gegenüberliegende, an den Giebelbogen insbesondere unmittelbar anschließende, überhangfreie Steigungsfläche, insbesondere zur Aufbaurichtung vertikale Vertikalfläche vorgesehen.

Alternativ oder zusätzlich kann bei einer Ausführung die Bogenhöhe kleiner sein als ein Drittel einer maximalen Drosselkanalhöhe des Drosselkanals korrespondierend, insbesondere parallel, zur Aufbaurichtung. Die Bogenhöhe kann bestimmt sein als eine Erstreckung des Giebelbogens in eine Richtung korrespondierend, insbesondere parallel, zur Aufbaurichtung, oberhalb des Bereichs der wenigstens einen Überhangfläche. Die Bogenhöhe ist vorzugsweise kleiner als die Bogenweite. Vorzugsweise kann die Bogenhöhe im Bereich zwischen 5% und 50%, insbesondere im Bereich von 10% bis 30%, bevorzugt im Bereich von 15% bis 25% der Bogenweite sein. Vorzugsweise sind die Drosselkanalbreite und die Drosselkanalhöhe in einer gleichen Schnittebene entsprechend dem Strömungsquerschnitt des Drosselkanals bestimmt. Gemäß dieser bevorzugten Ausführung ist der Drosselkanal unsymmetrisch ausgestaltet.

Außerdem kann es bevorzugt sein, dass bei einer Ausführung, die mit den vorigen Ausführungen kombinierbar ist, ein durch den Giebel definierter Bogenwinkel wenigstens 30° und/oder nicht mehr als 160° beträgt. Zusätzlich oder alternativ ist der Bogenwinkel bestimmt als eine Hälfte des Überhangwinkels.

Bei einer anderen Ausführung eines Drosselkanals definiert der Giebel einen Bodenradius, der kleiner ist als eine Schenkellänge einer links und/oder rechts an den Giebel angrenzenden Fläche, insbesondere Überhangfläche. Insbesondere liegt der Bogenradius im Bereich von 0,5 mm bis 10 mm. Vorzugsweise kann der Bogenradius im Bereich von 0,1 mm bis 5 mm liegen, vorzugsweise im Bereich von 0,15 mm bis 4 mm. Alternativ oder zusätzlich ist eine Teilbogenlänge vorgesehen, welche links oder rechts der Giebelspitze angeordnet ist und die kleiner ist als die Schenkellänge. Insbesondere ist die Teilbogenlänge kleiner als die Schenkelhöhe der daran anschließenden Fläche. Die Giebelspitze bezeichnet die in der Aufbaurichtung oberste Stellung des Giebels. Es kann beispielsweise in Kombination mit der vorigen Ausführung, bei der ein asymmetrischer Drosselkanal vorgesehen ist, realisiert sein, weshalb eine linke Teilbogenlänge ein anderes Maß hat als eine rechte Teilbogenlänge. Entsprechendes kann hinsichtlich einer Schenkellänge und/oder Schenkelhöhe gelten. Die Schenkellänge bezeichnet die Erstreckung der Fläche, insbesondere der Überhangfläche, angrenzend zum Giebelbogen. Die Schenkelhöhe bezeichnet die Erstreckung dieser Fläche ausschließlich in einer Orientierung entsprechend der Aufbaurichtung.

Gemäß einer weiteren Ausführung eines Drosselkanals weist dieser einen, insbesondere kontinuierlichen und/oder konstanten, Drosselkanalquerschnitt auf, der im in der Aufbaurichtung obigen Bereich konvex geformt ist und durch wenigstens eine schräge Überhangfläche begrenzt ist. Insbesondere kann der Drosselkanalquerschnitt im oberen Bereich durch zwei einander quer zur Aufbaurichtung gegenüberliegende Überhangflächen begrenzt sein. Im in Aufbaurichtung unteren Bereich ist der Drosselkanalquerschnitt durch eine die Drosselkanalbreite überspannende, konkave, insbesondere bogenförmige oder durch wenigstens eine schräge Fläche gebildete, insbesondere durch mehrere schräge Flächen gebildete, Rinne geformt. Die Rinne kann bei einer Weiterbildung in der Aufbaurichtung spiegelsymmetrisch dem Giebelbogen und der bzw. den daran angrenzende(n) Überhangflächen(n) gegenüberliegen.

Bei einer bevorzugten Ausführung umfasst der Drosselkanal zwei gegenüberliegende, spiegelsymmetrisch an den Giebelbogen anschließende Überhangflächen.

Gemäß einer bevorzugten Ausführung weist der Drosselkanal eine Tropfenform, Dreiecksform, Quaderform, Rautenform, Polyederform oder Ähnliches auf, wobei die "Kanten" der Form gebildet sind durch den Giebelbogen im oberen Bereich des Drosselkanals sowie vorzugsweise weitere mit einem Radius abgerundete Ecken an weiteren Stellen, die zwischen verschiedenen ebenen Flächen, beispielsweise Überhangflächen und/oder schrägen Flächen, gebildet sind.

Die Erfindung betrifft einen Drosselkörper zum Reduzieren des Fluiddrucks, insbesondere an einem Stellventil. Vorzugsweise ist der Drosselkörper zum Reduzieren des Fluiddrucks zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen vorgesehen. Der Drosselkörper weist mehrere sich von einem stromaufwärtigen Drosselkanaleintritt zu einem stromabwärtigen Drosselkanalaustritt verlaufende Drosselkanäle auf. Wenigstens ein Drosselkanal, mehrere Drosselkanäle oder alle Drosselkanäle des Drosselkörpers können wie oben beschrieben gebildet sein. Der Drosselkörper weist eine Aufbaurichtung auf, in welcher der Drosselkörper schichtweise additiv gebildet ist.

Es kann beispielsweise vorgesehen sein, dass der Drosselkörper eine Vielzahl von Drosselkanälen mit Drosselkanalquerschnitten der gleichen Form und/oder derselben Größe, insbesondere nach derselben Querschnittsfläche, aufweist. Vorzugsweise haben mehrere Drosselkanäle, insbesondere andere Drosselkanäle, eines Drosselkörpers die gleiche Querschnittsform. Es ist denkbar, dass in verschiedenen Bereichen eines Drosselkörpers Gruppen von Drosselkanälen vorgesehen sind, die gruppenweise die gleiche Drosselkanal-Querschnittsform aufweisen. Beispielsweise kann ein Drosselkörper eine Vielzahl von Drosselkanälen mit einem rautenförmigen oder tropfenförmigen Kanalquerschnitt aufweisen, die insbesondere gleichmäßig verteilt entlang der Oberfläche des Drosselkörpers angeordnete Drosselkanaleintritte oder Drosselkanalaustritte aufweisen. Vorzugsweise sind mehrere Drosselkanäle quer zur Aufbaurichtung in einem konstanten Querabstand zueinander angeordnet. In einer zur Aufbaurichtung korrespondierenden, insbesondere vertikalen, Richtung können mehrere Drosselkanäle benachbart zueinander angeordnet sein. Dabei kann vorzugsweise vorgesehen sein, dass in der Aufbaurichtung unmittelbar benachbarte Drosselkanaleintritte und/oder Drosselkanalaustritte nicht streng in der Aufbaurichtung benachbart angeordnet sind, also nicht notwendigerweise eine Rinne eines Drosselkanals unmittelbar in Aufbaurichtung oberhalb des Giebelbogens eines anderen Drosselkanals angeordnet ist. Vielmehr kann es vorgesehen sein, dass in der Aufbaurichtung mehrere Drosselkanäle stufenartig und/oder schräg zueinander versetzt angeordnet sind, also zwischen zwei in Aufbaurichtung benachbarten Drosselkanälen ein Versatz quer zur Aufbaurichtung, insbesondere entlang einer Umfangrichtung eines Ventilkäfigs, Ventilkolbens, oder dergleichen, vorgesehen ist, wobei insbesondere das untere Ende, wie eine Rinne, eines Drosselkanals neben dem Giebelbogen eines anderen Drosselkanals angeordnet ist. Alternativ oder zusätzlich ist es denkbar, die Vielzahl an Drosselkanaälen bei einem runden Drosselkörper, wie einem Drosselkolben oder einem Drosselkäfig, rotations-insymmetrisch und/oder in Umfangsrichtung bereichsweise gehäuft, insbesondere einseitig, an zu ordnen. Eine insbesondere einseitige Anhäufung der Kanäle am Umfang kann eine Richtkraft bewirken, die eine bessere, ruhigere Anlagefläche bewirken kann. Vorzugsweise ist eine einseitige Anhäufung einer Vielzahl an Drosselkanälen in Richtung eines Prozessfluid-Ein- oder -Ausgangs des Ventilgehäuses gerichtet. Eine einseitige Anhäufung kann alternativ oder zusätzlich vorgesehen sein, um die Ventilgehäuse-Wandung in den übrigen Bereichen zu schützen.

Bei einer bevorzugten Ausführung eines Drosselkörpers weisen die mehreren Drosselkanäle einen gekrümmten, insbesondere raumspiralförmig gekrümmten, Verlauf auf. Vorzugsweise weicht der Verlauf der Drosselkanäle von einem geradlinigen Verlauf ab. Auf diese Weise kann die Länge des Kanals zwischen dem Drosselkanaleintritt und dem Drosselkanalaustritt, insbesondere in einer Radialrichtung eines Ventilkäfigs oder Ventilkolbens, deutlich länger sein als eine unmittelbar geradlinige Strecke zwischen Drosselkanaleintritt und Drosselkanalaustritt. Dadurch kann die Drosselwirkung des Drosselkörpers erhöht sein. Die Querschnittsform des Drosselkanals bleibt vorzugsweise entlang der insbesondere gekrümmten Erstreckung des Drosselkanals vom Drosselkanaleintritt zum Drosselkanalaustritt gleich oder zumindest im Wesentlichen gleich. Entlang der Kanalerstreckung vom Drosselkanaleintritt zum Drosselkanalaustritt weist der Drosselkanal vorzugsweise eine konstante Drosselkanalquerschnittsfläche auf. Insbesondere bleibt die Querschnittsform des Drosselkanals vom Drosselkanaleintritt entlang der gesamten Erstreckung des Drosselkanals bis zum Drosselkanalaustritt gleich. Vorzugsweise befindet sich ein Giebelbogen eines Drosselkanals bei einem erfindungsgemäßen Drosselkörper kontinuierlich in dem Ende der Aufbaurichtung des Drosselkörpers im oberen Bereich des Drosselkanals.

Bei einer bevorzugten Ausführung des Drosselkörpers haben alle Überhangflächen einen Überhangwinkel kleiner oder gleich dem Winkelschwellenwert. Einzig in den Bereichen der Giebelbögen kann die Tangentialkurve entlang des Giebelbogenverlaufs den Wickelschwellenwert überschreiten.

Bei einer bevorzugten Ausführung umfasst der Drosselkörper Metallmaterial oder besteht daraus. Insbesondere umfasst der Drosselkörper eine Stahllegierung oder besteht daraus. Die Stahllegierung des Drosselkörpers umfasst wenigstens einen Legierungsbestandteil aus der Gruppe bestehend aus Chrom, Nickel, Molybdän, Niob und Titan. Alternativ kann für das Metallmaterial ein Werkstoff mit Martensitbildung ausgewählt sein, wie ein unlegierter Stahl, ein legierter Stahl, ein Nichteisen-Metall, ein Keramikmaterial, ein Polymermaterial.

Gemäß einer bevorzugten Ausführung eines Drosselkörpers sind die mehreren Drosselkanäle frei von spanend bearbeiteten Abschnitten. Insbesondere ist der Drosselkörper vollständig frei von spanend bearbeiteten Abschnitten. Indem eine spanende Nachbearbeitung am Drosselkörper weitgehend oder vollständig unterbleibt, können dank des generativen Herstellungsverfahrens aufwendige und damit kostenintensive Arbeitsschritte gespart werden, was sich in der Wirtschaftlichkeit eines erfindungsgemäßen Drosselkörpers niederschlägt.

Bei einer Ausführung eines Drosselkörpers weisen die mehreren Drosselkanäle mehrere Paare benachbarter Drosselkanäle mit unterschiedlichen, paarweise spiegelsymmetrischen Kanalquerschnitten auf. Insbesondere können paarweise spiegelsymmetrische Kanalquerschnitte gebildet sein durch paarweise nebeneinander angeordnete Drosselkanäle, wobei ein erster, beispielsweise linker Drosselkanalpartner angrenzend an dessen Giebelbogen einseitig in Überhangfläche und an der anderen Seite eine Vertikalfläche aufweist. Der zweite, beispielsweise rechte Drosselkanalpartner kann links an seinem Giebelbogen angrenzend eine Vertikalfläche und rechts eine Überhangfläche aufweisen. Ein Drosselkörper mit solchen Drosselkanalpaaren kann besonders gut dazu geeignet sein, hohe statische Kompressionskräfte in der Aufbaurichtung zu ertragen, die der Hubachse eines Stellventils entsprechen kann, indem zusätzliche Stege zwischen Drosselkanalpartnern gebildet sind.

Erfindungsgemäß ist ein Drosselkörper zum Reduzieren des Fluiddrucks vorgesehen, insbesondere an einem Stellventil, vorzugsweise zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen. Der Drosselkörper umfasst mehrere von einem stromaufwärtigen Drosselkanaleintritt zu einem stromabwärtigen Drosselkanalaustritt verlaufende Drosselkanäle. Bei einem beispielsweise scheibenförmigen Drosselkörper können sich die Drosselkanäle von Drosselkanaleintritten an einer Vorderseite des scheibenförmigen Drosselkörpers zu Drosselkanalaustritten an einer Rückseite des scheibenförmigen Drosselkörpers erstrecken. Bei einem zylinderhülsenförmigen Drosselkörper, der beispielsweise als Ventilkäfig ausgelegt sein kann, können die Drosselkanaleintritte an einer radialen Innenfläche des zylinderhülsenförmigen Drosselkörpers angeordnet sein und die Drosselkanalaustritte an einer radialen Außenseite des Drosselkörpers. Bei einem zylinderhülsenförmigen Drosselkörper erstrecken sich die Drosselkanäle in einer im Allgemeinen radialen Richtung durch den zylinderhülsenförmigen Körper hindurch. Es ist denkbar, dass abhängig beispielsweise von einer Strömungsrichtung durch ein Stellventil die Drosselkanaleintritte an einer radialen Außenseite und die Drosselkanalaustritte an der radialen Innenseite eines zylinderhülsenförmigen Drosselkörpers gebildet sind.

Gemäß der Erfindung ist es vorgesehen, **dass die** mehreren Drosselkanäle an ihrem stromaufwärtigen Drosselkanaleintritt und an ihrem stromabwärtigen Drosselkanalaustritt einen jeweiligen Austrittsradius aufweisen und eine den Austrittsradius umgebende, insbesondere stufenartige, Aufweitung. Die Aufweitung kann im Wesentlichen dieselbe Querschnittsform, jedoch eine größere Querschnittsbreite als der ihr zugeordnete Drosselkanal haben. Ein Drosselkanalradius bezeichnet im Allgemeinen eine abgerundete Übergangsfläche vom Verlaufsquerschnitt des Drosselkanals zur äußeren Oberfläche eines Drosselkörpers, beispielsweise einer Vorderseite, einer Rückseite, Radialinnen- oder -außenseite.

Die Verwendung von Austrittsradius und Aufweitung hat sich insbesondere zur Vermeidung von spanender Nachbearbeitung an Drosselkörpern, besonders zylinderhülsenförmigen Drosselkörpern, als vorteilhaft erwiesen. Dank Aufweitung und Austrittsradius kann auf eine Nachbearbeitung des Drosselkörpers in der Umgebung der Drosselkanalaustritte und/oder -eintritte die Erzeugung von Pfeifgeräuschen vermieden werden, ebenso wie Einzeltöne, ohne dass eine Nachbearbeitung des Drosselkörpers erforderlich ist. Gleichzeitig kann eine verschleißärmere mehrstufige Entspannung des Prozessfluids am Drosselkanalaustritt gewährleistet werden.

Gemäß einer bevorzugten Ausführung eines Drosselkörpers mit einer Aufweitung ist die Aufweitung in Drosselkanalverlaufsrichtung wenigstens so lange wie der Austrittsradius. Vorzugsweise ist die Aufweitung nicht mehr als fünf Mal, insbesondere nicht mehr als doppelt so lange wie der Austrittsradius.

Gemäß einer anderen Ausführung eines Drosselkörpers, die mit den vorigen Ausführungen kombinierbar ist, ist vorgesehen, dass die Aufweitung wenigstens so breit ist wie der ihr zugeordnete Drosselkanal und dessen Austrittsradius. Die Breite bestimmt sich quer zur Drosselkanalverlaufsrichtung. Die Drosselkanalverlaufsrichtung kann durch die Mittelpunktlinie bzw. Strömungslinie des Prozessfluids durch den jeweiligen Drosselkanal definiert sein. Die Breite des Austrittsradius beschreibt im Allgemeinen die Quererstreckung des Austritts in Bezug auf die Drosselkanalverlaufsrichtung, sowohl in Bezug auf die Aufbau- bzw. Hubrichtung als auch quer dazu.

Weiterhin betrifft die Erfindung einen Ventilkäfig oder Ventilkolben für ein Stellventil zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen. Der Ventilkäfig oder Ventilkolben kann einen zylinderhülsenförmigen Drosselkörper umfassen oder daraus bestehen, der wie der oben beschriebene Drosselkörper gebildet ist. Alternativ oder zusätzlich umfasst der Ventilkäfig oder Ventilkolben mehrere Drosselkanäle, die wie oben beschrieben gebildet sein können. Der zylinderhülsenförmige Drosselkörper definiert eine Hubachse und ist schichtweise additiv in einer Aufbaurichtung gebildet. Vorzugsweise ist der Ventilkäfig oder Ventilkolben an seiner inneren Umfangsfläche frei von spanend bearbeiteten Abschnitten. Vorzugsweise ist der Ventilkäfig oder Ventilkolben an seiner Außenumfangsfläche frei von spanend bearbeiteten Abschnitten. Alternativ oder zusätzlich kann der Ventilkäfig an seiner Ring-Stirnfläche und/oder seiner Ring-Fußfläche frei von spanend bearbeiteten Abschnitten sein. Alternativ oder zusätzlich kann der Ventilkolben an seiner Ring-Stirnfläche und/oder seiner tellerförmigen Basisplate frei von spanend bearbeiteten Abschnitten sein.

Beim erfindungsgemäßen Ventilkäfig oder Ventilkolben sind wenigstens ein erster Drosselkanal und wenigstens ein zweiter, in Richtung der Hubachse zu dem ersten Drosselkanal benachbarter Drosselkörper vorgesehen. Ein oberer Bereich des ersten Drosselkanals, beispielsweise dessen Giebelbogen, ist in Richtung der Hubachse auf Höhe eines unteren Bereichs, beispielsweise einer Rinne, des zweiten Drosselkanals angeordnet. In Richtung der Hubachse ist demnach ein Überlappungsbereich in Verlauf der Hubachse vorgesehen, in der zwei aneinander angrenzende Drosselkanäle oder Gruppen von Drosselkanälen wie Umfangsreihen von Drosselkanälen, angeordnet. So ist bei einem Ventilkäfig oder Ventilkolben gewährleistet, dass bei einer Öffnungsbewegung eines Stellglieds, wie eines Stellkolbens, des Stellventils in der Hubrichtung eine kontinuierliche Öffnungskennlinie bereitgestellt wird. Auf diese Weise lassen sich gewünschte Prozessfluidströmungen in einem Stellventil mit Hilfe des Ventilkäfigs oder Ventilkolbens präzise einstellen.

Vorzugsweise ist bei einer Ausführung eines Ventilkäfigs oder Ventilkolbens vorgesehen, dass die Giebelbögen des ersten Drosselkanals im Bereich der Drosselkanalhöhe, vorzugsweise der Rinne, des zweiten Drosselkanals angeordnet ist. Es sei klar, dass der erste Drosselkanal Teil einer Gruppe erster Drosselkanäle, beispielsweise einer entlang des Außenumfangs aufgereihten Reihe von Drosselkanaleintritt sei. Vorzugsweise umfasst der Ventilkäfig oder Ventilkolben mehrere in Richtung der Hubachse benachbarter Gruppen von Drosselkanälen, wobei die zueinander in der Hubrichtung unmittelbar benachbarten Drosselkanalgruppen ineinandergreifen.

Bei einer Ausführung eines Ventilkäfigs oder Ventilkolben für ein Stellventil zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen, der wie der oben beschriebene Ventilkäfig oder Ventilkolben gebildet sein kann, umfasst der Ventilkäfig oder Ventilkolben einen zylinderhülsenförmigen Drosselkörper oder besteht daraus. Insbesondere kann der Ventilkäfig oder Ventilkolben einen zylinderhülsenförmigen Drosselkörper wie oben beschrieben umfassen. Der Ventilkäfig oder Ventilkolben weist mehrere Drosselkanäle auf, insbesondere wie oben beschrieben. Dabei ist vorgesehen, dass der zylinderhülsenförmige Drosselkörper eine Hubachse definiert und schichtweise additiv in eine Aufbaurichtung gebildet ist. Vorzugsweise ist vorgesehen, dass ein geringster Abstand zweier beliebiger unmittelbar benachbarter Drosselkanäle kleiner ist als eine Kanalbreite und eine vorbestimmte Stegbreite, insbesondere 0,5 mm, vorzugsweise 1 mm nicht unterschreitet. Bei einem Ventilkäfig oder Ventilkolben, bei dem zwei einzelne unmittelbar benachbarte Drosselkanäle oder Gruppen benachbarter Drosselkanäle zueinander beabstandet sind durch eine schmale Stegbreite, die kleiner ist als die Drosselkanalbreite, kann ein genau definierter hoher Volumendurchfluss durch den Ventilkäfig oder Ventilkolben erreicht werden. Vorzugsweise kann der Ventilkäfig oder Ventilkolben in Bezug auf die Hubrichtung verschiedene Abstände aufweisen, wobei in wenigstens einem Abschnitt benachbarte Drosselkanäle vorgesehen sind, zwischen denen eine Stegbreite bereitgestellt ist, die kleiner ist als die Drosselkanalbreite der in diesem Bereich angeordneten Drosselkanäle. In anderen Bereichen, beispielsweise einem in Richtung der Hubachse versetzten Bereich, können mehrere Drosselkanäle vorgesehen sein, zwischen denen größere Abstände zwischen den jeweils benachbarten Drosselkanälen vorgesehen sind. In Kombination mit der oben beschriebenen Ausführung kann vorgesehen sein, dass sowohl innerhalb des jeweiligen Bereiches und/oder am Übergang zwischen den Bereichen ein oberer Bereich eines ersten Drosselkanals in Richtung Hubachse auf Höhe eines unteren Bereichs des zweiten Drosselkanals angeordnet ist. Bei einem solchen Ausführungsbeispiel lässt sich in dem ersten Bereich ein hohes Durchflussvolumen einstellen, in dem zweiten Bereich lassen sich geringe Durchflussvolumina präzise einstellen, sodass eine Bewegung eines Stellglieds in dem Ventilkäfig oder Ventilkolben eine präzise Durchflusskennlinie einstellen kann.

Gemäß einer bevorzugten Ausführung des Ventilkäfigs oder Ventilkolbens, welche mit den zuvor beschriebenen kombinierbar ist, korrespondiert die Hubrichtung zu der Aufbaurichtung. Insbesondere weist der Ventilkäfig oder Ventilkolben in Bezug auf die Hubrichtung eine vorbestimmte Öffnungsorientierung und eine dazu entgegengesetzte Schließorientierung auf. Vorzugsweise entspricht hierbei die Aufbaurichtung der Schließrichtung. Auf diese Weise kann gewährleistet sein, dass bei einem Einbau des Drosselkörper-Ventilkäfigs in einem Stellventil die Giebelbögen in Richtung auf einen Ventilsitz zu gerichtet sind. Beim Öffnen eines Stellglieds in einem erfindungsgemäßen Ventilkäfig verfährt dieses zunächst entlang des Giebelbogens eines ersten Drosselkanals oder einer Gruppe erster Drosselkanäle, sodass beim Öffnen des Stellventils zunächst einzig dieser Giebelbogen oder diese Giebelbögen den Durchströmungsquerschnitt des Stellventils bereitstellen. Alternativ kann ein als erfindungsgemäßer Drosselkörper in Form eines Lochkegels gebildeter Ventilkolben derart ausgelegt und eingerichtet sein, dass beim Verfahren des Lochkegels in eine Öffnungsrichtung dieser zunächst einen Giebelbogens eines ersten Drosselkanals oder einer Gruppe erster Drosselkanäle am Ventilsitz freigibt, sodass beim Öffnen des Stellventils zunächst einzig dieser Giebelbogen oder diese Giebelbögen den Durchströmungsquerschnitt des Stellventils bereitstellen. Dadurch lassen sich auch sehr kleine Prozessfluidströme präzise regeln.

Die Erfindung betrifft ferner ein Stellventil zum Anordnen in einer Prozessfluidleitung einer prozesstechnischen Anlage. Die prozesstechnische Anlage kann beispielsweise eine chemische Anlage, wie eine petrochemische Anlage, ein Kraftwerk, etwa ein Solarthermiekraftwerk, ein Nuklearkraftwerk oder dergleichen, eine Brauerei oder andere Lebensmittel-verarbeitende Anlagen oder eine andere prozesstechnische Anlage sein, die sich Prozessfluidströmen bedient. Das Stellventil hat ein Stellventilgehäuse und einen darin in Hubrichtung beweglichen Hubkolben zum Einstellen einer Prozessfluidströmung. Der Hubkolben kann als ein oben beschriebener Lochkegel-Ventilkolben realisiert sein. An oder in dem Stellventil kann ein Drosselkörper wie oben beschrieben vorgesehen sein. Insbesondere kann in dem Stellventil ein Ventilkäfig wie zuvor beschrieben vorgesehen sein. Insbesondere ist in dem Stellventil ein Ventilkäfig vorgesehen, insbesondere wie oben beschrieben, in dem der Hubkolben angeordnet, insbesondere in der Hubrichtung translationsbeweglich geführt ist.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:
- Fig.1: eine schematische Schnittansicht eines erfindungsgemäßen Stellventils mit einem Ventilkäfig, der eine Vielzahl von Drosselkanälen aufweist;
- Fig. 2: eine Querschnittsdarstellung einer ersten Ausführung eines Drosselkanals;
- Fig.3: eine Querschnittsdarstellung einer zweiten Ausführung eines Drosselkanals;
- Fig. 4: eine schematische Querschnittsdarstellung einer dritten Ausführung eines Drosselkanals;
- Fig. 5: eine andere Darstellung einer anderen Querschnittsdarstellung eines Drosselkanals;
- Fig. 6: noch eine andere Querschnittsansicht eines Drosselkanals;
- Fig.7: eine Ausführungsform eines Drosselkanals mit spiralförmigem Verlauf;
- Fig. 8: eine weitere Ausführungsform eines Ventilkäfigs;
- Fig. 9: ein anderer Ventilkäfig mit rautenförmigen Drosselkanälen;
- Fig. 10: ein erfindungsgemäßer Ventilkäfig mit Drosselkanälen, die einen Austrittsradius und eine stufenartige Aufweitung aufweisen;
- Fig. 11: eine Querschnittsansicht durch den Drosselkörper gemäß Fig. 10;
- Fig. 12: eine Detailansicht der Drosselkanäle des Drosselkörpers gemäß Fig. 10; und
- Fig. 13: ein erfindungsgemäßer Drosselkörper in Form eines Lochkegels in einem Stellventil.

In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

Ein erfindungsgemäßes Stellventil ist im Allgemeinen mit dem Bezugszeichen 100 bezeichnet. Ein erfindungsgemäßer Drosselkörper ist im Allgemeinen mit dem Bezugszeichen 1 versehen. Drosselkanäle unterschiedlicher Gestalt sind mit dem Bezugszeichen 11, 13, 19, 17 oder 19 versehen. Ein erfindungsgemäßer Ventilkäfig wird im Allgemeinen mit dem Bezugszeichen 101 bezeichnet. Ein erfindungsgemäßer Ventilkolben hat das Bezugszeichen 111.

Die Drosselkanäle sind in einem Drosselkörper 1 ausgebildet, der eine Barriere durch den Prozessfluidstrom bildet, welche einzig durch die Drosselkanäle passierbar ist. Der Fachmann versteht, dass unerwünschte Leckage hierbei außer Betracht gelassen wird. In den hier dargestellten und beschriebenen Ausführungen ist der Drosselkörper 1 im Allgemeinen als hohlzylindrischer Ventilkäfig 101 dargestellt. Der Fachmann versteht, dass abweichend von der abgebildeten Geometrie des Drosselkörpers durchaus zahlreiche andere Variationen denkbar sind, wie beispielsweise scheibenförmige Drosselkörper, die beispielsweise einen Rohrinnendurchmesser bedecken.

Ein Stellventil ist im Allgemeinen gebildet durch ein Ventilgehäuse 105 mit einer ersten Prozessfluid-Strömungsöffnung 115 und einer zweiten Prozessfluid-Strömungsöffnung 125, wobei das Prozessfluid im betriebsgemäßen Zustand von der einen zu der anderen durch das Steuerventil 100 fließen kann. Abhängig von der Auslegung der prozesstechnischen Anlage kann die erste Prozessfluid-Strömungsöffnung 115 als Prozessfluideingang 115 des Stellventils 100 ausgelegt sein und die zweite Prozessfluid-Strömungsöffnung 125 als Prozessfluidausgang 125, oder umgekehrt. Zwischen dem Prozessfluideingang 115 und dem Prozessfluidausgang 125 ist im Ventilgehäuse 105 eine Durchgangsöffnung 113 ausgebildet. In oder an der Durchgangsöffnung 113 kann ein Ventilsitz angeordnet sein, der zum Schließen des Stellventils 100 in einen abdichtenden Kontakteingriff mit dem Hubkolben 103 des Stellventils bringbar ist.

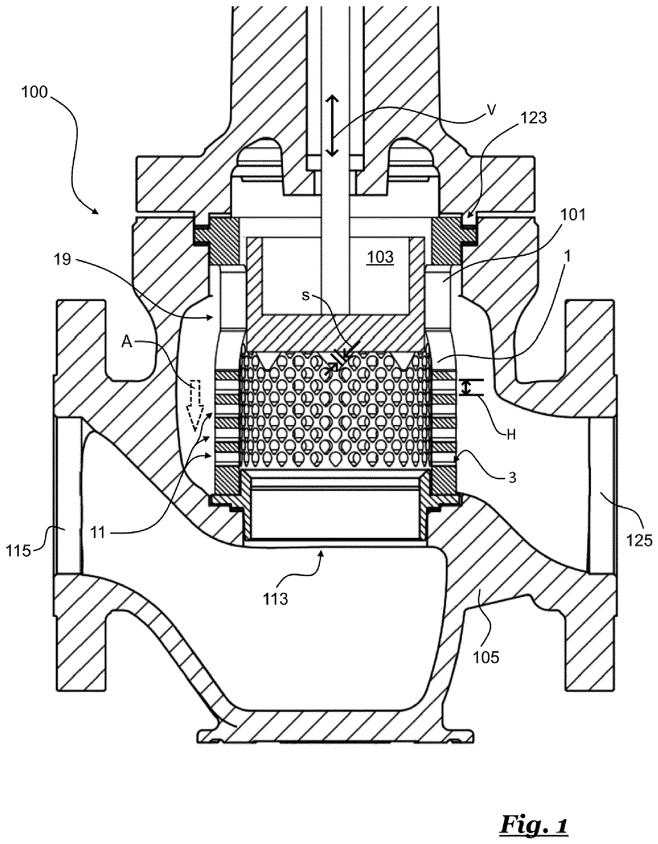

Der massive Hubkolben 103 ist in einer Hubrichtung V translatorisch beweglich im Stellventil 100 gehalten. Der Hubkolben 103 hat in der hier in Figur 1 abgebildeten exemplarischen Ausführungsform eine Stellstange, die gegenüber der Durchgangsöffnung 113 durch eine Steueröffnung 123 aus dem Stellventilgehäuse 105 hinausgeführt ist zu einem (nicht näher abgebildeten) Stellaktor. Die Betätigungsöffnung 123 ist durch einen Gehäusedeckel 107 verschlossen. In der hier abgebildeten Ausführung ist in der Hubrichtung V zwischen dem Gehäusedeckel 107 und der Durchgangsöffnung 113 der hohlzylindrische Ventilkäfig 108 gehalten. Zum abdichtenden Schließen des Stellventils 100 selbst bei hohem Differenzdruck zwischen Prozessfluideingang 115 und Prozessfluidausgang 125 kann in der Hubrichtung V eine Spannkraft auf den Ventilkäfig 101 wirken, wie auch auf eventuelle zusätzliche Dichtmittel, beispielsweise Dichtringe, in Kontaktbereichen zwischen dem Ventilkäfig 101 und dem Ventilgehäuse 105.

Der hier in Figur 1 exemplarisch abgebildete Ventilkäfig 101 ist als Drosselkörper 1 realisiert. Im Drosselkörper 1 sind mehrere fünfeckige Drosselkanäle 19 und eine Vielzahl tropfenförmiger Drosselkanäle 11 vorgesehen. In einer Stellung des Hubkolbens 103 kann sich der Hubkolben mit dem Ventilsitz an der Durchgangsöffnung 113 in einem abdichtenden Kontakteingriff befinden. Bei einer translatorischen Verlagerung des Hubkolbens 103 gibt der Hubkolben 103 die Durchgangsöffnungen 113 frei, sodass Prozessfluid vom Prozessfluideingang 115 durch die Drosselkanäle 11, 19 des Drosselkörpers 1 zum Prozessfluidausgang 125 fließen kann.

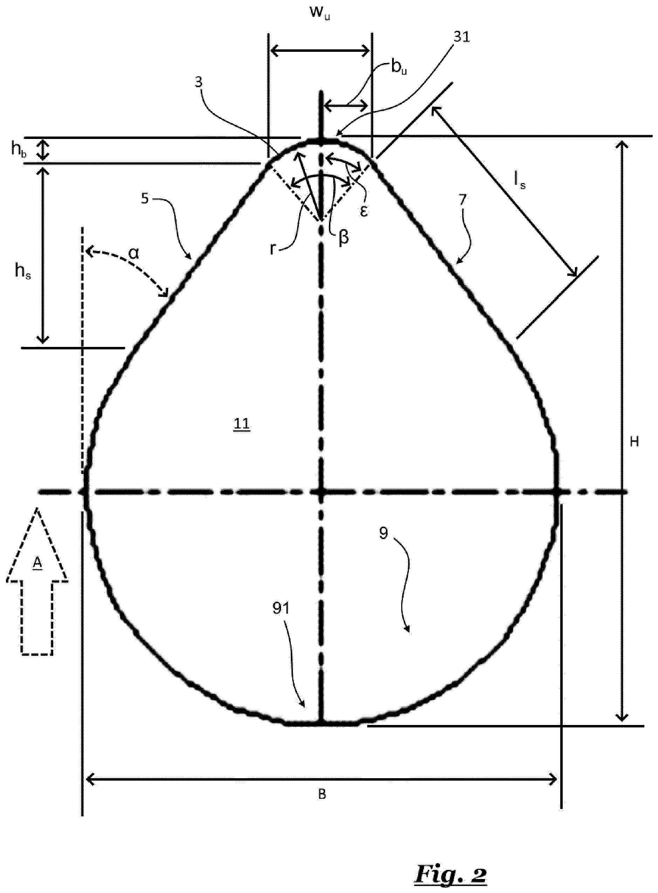

Einen Drosselkanal 11 zeigt Figur 2 im Detail. Der Drosselkanal 11 kann eine geradlinige Kanalerstreckung in Blickrichtung der Zeichnung aufweisen und entlang seiner Erstreckung vom Drosselkanaleintritt zum Drosselkanalaustritt einen geradlinigen Drosselkanalverlauf mit konstanter Kanalform und -größe haben.

Die im Wesentlichen tropfenförmige Gestalt des Drosselkanals 11 hat im in Aufbaurichtung A oberen Ende einen Giebelbogen 3. Beidseitig an den Giebelbogen 3 schließen die Überhangflächen 5 und 7 unmittelbar an. Die Überhangflächen sind spiegelsymmetrisch zueinander angeordnet. In Bezug auf die Aufbaurichtung weisen die Überhangflächen 5 und 7 einen Überhangwinkel α auf, der in der in Figur 2 dargestellten exemplarischen Ausführung etwa 30° groß ist. Die Überhangflächen 5 und 7 gehen tangentenartig in den Giebelbogen 3 über. Zwischen den Überhangflächen 5 und 7 spannt der Giebelbogen 3 einen Bogenwinkel β auf. Der Giebelbogen 3 beschreibt einen Bogenradius r. Die Teilwinkel ε1 und ε2 beidseits der Giebelspitze 31 sind gleich groß. Der Giebelbogen 3 hat im Verlauf seines Bogenwinkels β eine Bogenhöhe h_{b}.

Der Giebelbogen 3 hat quer zur Aufbaurichtung A eine Bogenweite w.

Die Überhangflächen 5 und 7 beschreiben zwischen dem Giebelbogen 3 und dem in Aufbaurichtung A unteren Grund 9 des Drosselkanals 11 eine gerade Linie mit einer Schenkellänge lₛ und einer Schenkelhöhe hₛ. Die Schenkelhöhe hₛ bestimmt sich in der Aufbaurichtung. Die Schenkellänge lₛ bestimmt sich parallel zur Überhangfläche 5 oder 7.

In der Aufbaurichtung A gegenüber zum Giebelbogen 3 hat der Drosselkanal 11 einen Grund 9. Der Grund 9 hat hier die Form einer im Wesentlichen halbkreisförmigen Rinne. Die Teilkreisform des Rinnen-Grunds 9 setzt sich in der Aufbaurichtung bis zu den Überhangflächen 5 bzw. 7 fort.

Im Bereich des Grunds 9 hat der Querschnitt des Drosselkanals 11 Steigungsflächen mit zunehmenden Neigungswinkeln. An der untersten Stelle 91 des Grunds 9 verläuft die Kanalinnenseite im Wesentlichen orthogonal zur Aufbaurichtung A. Der Neigungswinkel ist an dieser Stelle 91 0° in Bezug auf die Horizontale. Mit zunehmendem Abstand zur niedrigsten Stelle 91 nimmt der Neigungswinkel der Innenseite des Kanals im Bereich des Grunds 9 zu. An der breitesten Stelle des Drosselkanals 11 beträgt der Neigungswinkel in etwa 90° relativ zur Horizontalen. Der Wandverlauf an der breitesten Stelle des Drosselkanals 11 entspricht im Wesentlichen der Aufbaurichtung A. Ein Überhangwinkel α liegt an dieser Stelle nicht vor. An der breitesten Stelle des Drosselkanals 11 bestimmt sich dessen Drosselkanalbreite B.

Oberhalb der breitesten Stelle des Kanals 11 verjüngt sich dieser wieder, hin zu den Überhangflächen 5 und 7. Dabei nimmt der Überhangwinkel α im Übergangsbereich vom Grund 9 zu den Überhangflächen 5 und 7 stetig zu. Die Überhangflächen 5 und 7 haben stets einen Überhangwinkel, relativ zur Aufbaurichtung A, der einen vorbestimmten Winkelschwellwert von höchstens 75° nicht überschreitet. Nur im schmalen Bereich des Giebelbogens 3, der deutlich kleiner ist als die Drosselkanalbreite B, wird der Überhangwinkel α überschritten.

Der Giebelbogen 3, wo größere Winkel auftreten können, als der Überhangwinkel α der Überhangflächen 5 und 6, hat eine schmale Bogenweite w. Die Bogenweite w ist deutlich kleiner als die Drosselkanalbreite B. Die Bogenweite w liegt zwischen etwa 5% und 30% der Drosselkanalbreite B, insbesondere zwischen etwa 10% und etwa 20% der Drosselkanalbreite B. Vorzugsweise kann die Bogenweite 15 ± 2° der Drosselkanalbreite B betragen. In Bezug auf eine kostengünstige und verlässliche Fertigung von Drosselkanälen hoher Güte für eine präzise Prozessfluidströmung hat sich dies als besonders geeignet herausgestellt.

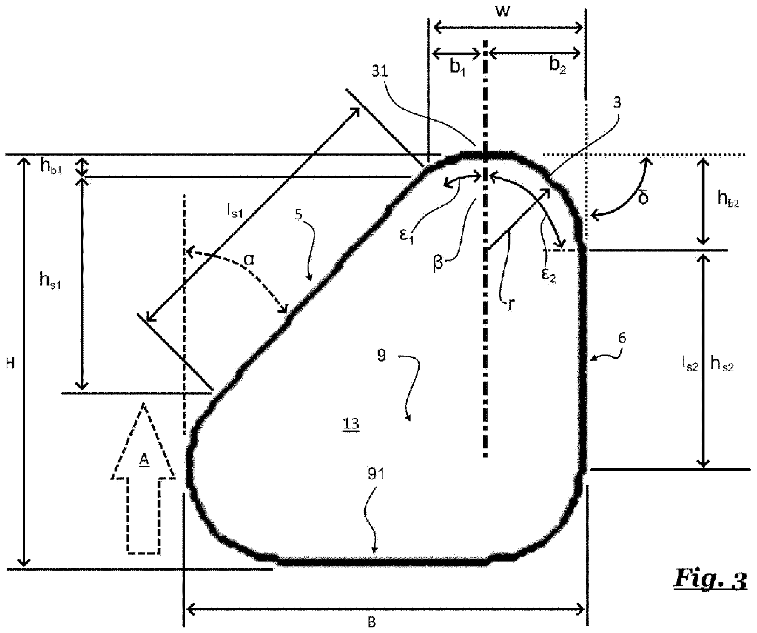

Einen anderen Querschnitt eines Drosselkanals 13 zeigt Figur 3. Der Drosselkanal 13 in Figur 3 ist nicht spiegelsymmetrisch in Relation zur Aufbaurichtung A. Nur an einer Seite der Giebelspitze 31 (im Bild links) ist eine Überhangfläche 5 vorgesehen. Für diese Überhangfläche 5 gilt im Wesentlichen das gleiche wie oben in Bezug auf die in Figur 2 abgebildete Ausführungsform eines Drosselkanals 11. Auf der anderen Seite der Giebelspitze 31 (im Bild rechts) ist eine Vertikalfläche 6 vorgesehen, die sich im Wesentlichen parallel zur Aufbaurichtung A ohne Neigungs- oder Überhangswinkel erstreckt. Der linke Bogenteilwinkel ε1 ist größer als der rechte Bogenteilwinkel ε2. Gleiches gilt für die entsprechende linke bzw. rechte Bogenteilbreite b₁ und b₂. Die Bogenweite w setzt sich aus den beiden Bogenteilbreiten zusammen. Der Bogenwinkel β setzt sich aus den beiden Bogenteilwinkeln ε1 und ε2 zusammen. Der Krümmungsradius oder Bogenradius r des Giebelbogens 3 beim in Figur 3 dargestellten dreieckartigen Drosselkanal 13 ist beidseits der Giebelspitze 31 gleich groß. Entlang des vollständigen Verlaufs des Giebelbogens 3 ist der Bogenradius konstant. In Bezug auf eine Horizontale ist die Vertikalfläche 6 in einem rechten Winkel δ angeordnet.

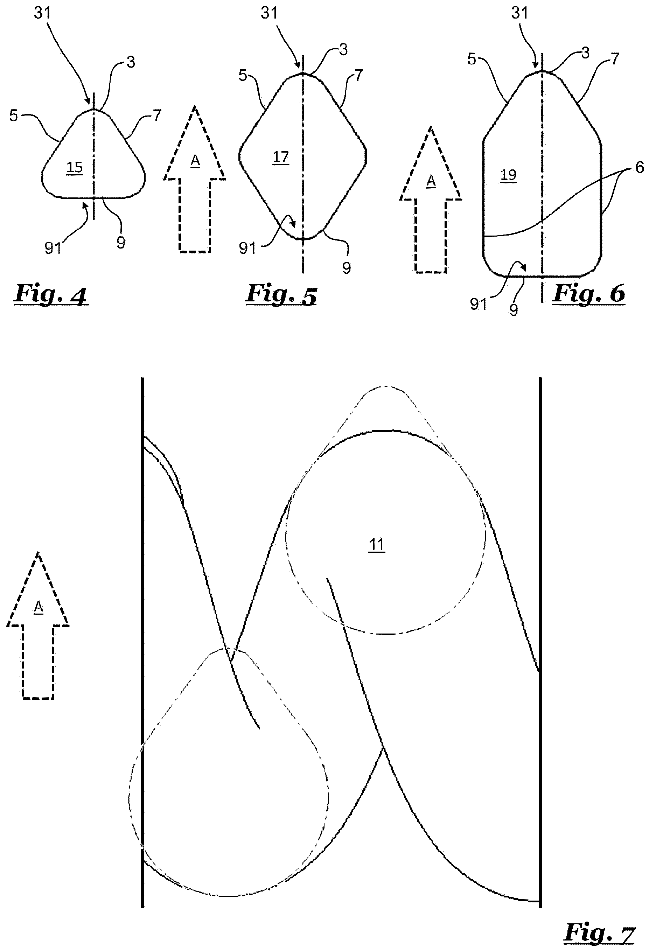

Beim in Figur 4 dargestellten Drosselkanal 13 in Gestalt eines gleichschenkligen Dreiecks mit abgerundeten Ecken ist der Grund 9 gegenüber dem Giebelbogen 3 flach. Teilkreisabschnitte beidseits der niedrigsten Stelle 91 definieren die größte Drosselkanalbreite B. Vom Bereich der größten Drosselkanalbreite B in der Aufbaurichtung A nach oben verjüngt sich der Querschnitt des Drosselkanals 15.

Die rechte Bogenhöhe h_{B2} ist wesentlich größer als die linke Bogenhöhe h_{B1} des linken Teilbogens. Für die Vertikalfläche 6 entspricht die Schenkellänge l_{S2} der Schenkelhöhe h_{S2}. Von der niedrigsten Stelle 91 des Grunds 9 des Drosselkanals 13 bis zur Giebelspitze 31 dehnt sich eine Drosselkanalhöhe H aus. Der Grund 9 ist beim Drosselkanal 13 durch eine breite, U-förmige Rinne gebildet. Zwischen zwei in etwa viertelkreisförmigen Rinnenaußenseiten, die sich zur Vertikalfläche 6 bzw. der Überhangfläche 5 hin nach oben erstrecken, ist im Grund 9 ein flacher Bereich gebildet, der sich im Wesentlichen horizontal erstreckt und einen niedrigsten Bereich 91 definiert. Die Überhangfläche 5 hat einen Überhangwinkel α von etwa 45°.

Figur 4 zeigt einen anderen Drosselkanal 15 mit einem dreieck-artigen Querschnitt nach Art eines gleichschenkligen Dreiecks. Bei dieser wie auch den folgenden Kanalgeometrien 17, 19 ist die Querschnittsgestalt des Kanals 15 spiegelsymmetrisch, wie bei der zuvor in Bezug auf Figur 2 beschriebenen Ausführung. In Bezug auf die Geometrien der Drosselkanäle 15, 17 und 19 gemäß den Figuren 4, 5 und 6 wird im Wesentlichen auf das oben in Bezug auf Figur 2 Beschriebene verwiesen. Die Geometrien der Drosselkanäle 15, 17 und 19 unterscheiden sich von den im Hinblick auf Figur 1 beschriebenen Drosselkanälen im Wesentlichen nur durch die Gestalt des Kanal-Grunds 9.

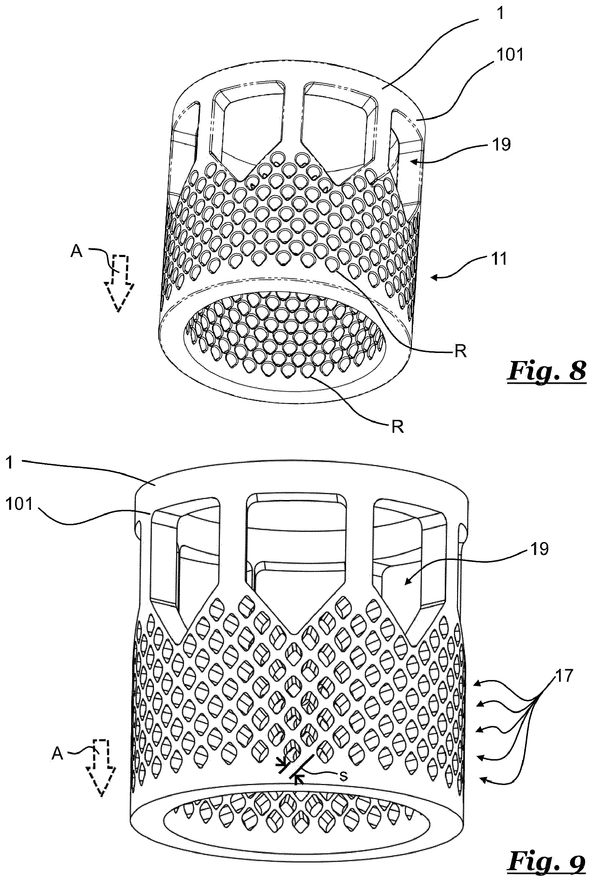

Figur 5 zeigt einen Drosselkanal 17 mit rautenförmiger Gestalt mit abgerundeten Ecken. Einen Drosselkörper mit derart geformten Drosselkanälen 15 zeigt Figur 9. Entgegen der Aufbaurichtung A ist gegenüber dem Giebelbogen 3 ein bogenförmiger Grund 9 gebildet. Der rautenförmige Drosselkanal 15 ist nicht nur, wie die übrigen hier beschriebenen Kanäle, quer zur Aufbaurichtung A spiegelsymmetrisch, sondern darüber hinaus auch in der Aufbaurichtung A. Die Steigungswinkel der an den Bogengrund 9 angrenzenden Neigungsflächen korrespondiert zum Überhangwinkel α der Überhangflächen 5 und 7. Zwischen den schrägen Neigungsflächen des Kanalgrunds 9 und den Überhangflächen 5, 7 ist die größte Drosselkanalbreite B des Drosselkanals 17 definiert, die sich zwischen den gegenüberliegenden Übergängen zwischen den Neigungsflächen und den Überhangflächen 5, 7 ausdehnen.

Figur 6 zeigt eine andere Ausführung eines Drosselkanals 19, die eine symmetrische, fünfeck-artige Gestalt hat. Am in Aufbaurichtungen obersten Ende des Drosselkanalquerschnitts erstrecken sich beidseitig und symmetrisch von der Bogenspitze 31 des Giebelbogens 3 gegenüberliegende Überhangflächen 5 und 7. Die Überhangflächen 5 und 7 haben wie bei den Ausführungen gemäß der Figuren 5 und 2 den gleichen Überhangwinkel α. Der Grund 9 ist durch eine tiefe Rinne mit rechteckigem Querschnitt und abgerundeten Ecken gebildet. Der Abstand in der Aufbaurichtung A zwischen der niedrigsten Stelle 91 und den Überhangflächen 5, 7 ist größer als die Schenkelhöhe hₛ der Überhangfläche 5 bzw. 7. Der Grund 9 ist gebildet durch eine im Wesentlichen horizontale Bodenfläche an der niedrigsten Stelle 91 des Drosselkanals 19 und zwei einander gegenüberliegende seitliche Vertikalflächen, die sich unterhalb der Überhangflächen 5 und 7 erstrecken. Die horizontale Bodenfläche und die vertikalen Seitenflächen 6 sind durch abgerundete Ecken miteinander verbunden, die einen Krümmungsradius haben, der ähnlich groß ist wie der Bogenradius. Zwischen den Überhangflächen 5, 7 und den Vertikalflächen 6 können ebenfalls Übergangsbereiche mit einem Krümmungsradius vorgesehen sein, der ähnlich groß ist wie der Bogenradius.

Figur 7 zeigt schematisch einen Verlauf eines Drosselkanals, dessen Querschnitt dem oben in Bezug auf Figur 2 beschriebenen entspricht. Der Spiralverlauf des in Figur 7 abgebildeten Drosselkanals 11 kann sich im Wesentlichen quer zur Aufbaurichtung A erstrecken. Der Giebelbogen 3 ist im oberen Bereich des Drosselkanals 11 angeordnet. Bezüglich unterschiedlicher geeigneter Spiralform wird auf EP 3 693 645 A1 verwiesen, deren Inhalt durch Bezugnahme vollumfänglich in die vorliegende Offenbarung mit aufgenommen ist.

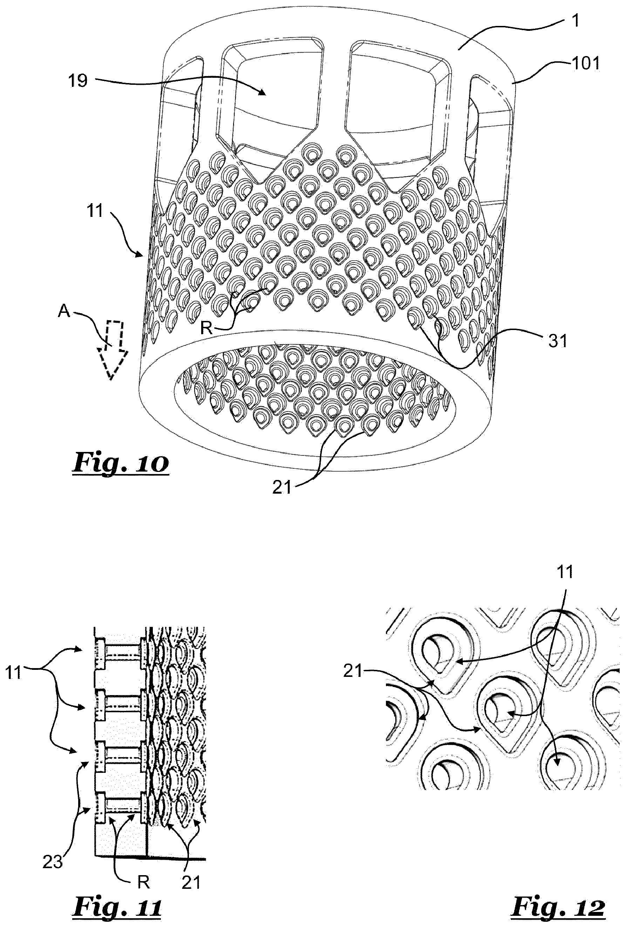

Die in den Figuren 8 bis 11 abgebildeten verschiedenen Drosselkörper 1 in Form von Ventilkäfigen 101 entsprechen mit Ausnahme der jeweiligen Drosselkanal-Geometrie im Wesentlichen in ihrem jeweiligen Aufbau dem bzgl. Figur 1 beschriebenen Ventilkäfig 101. Die Einbaurichtung der Ventilkäfige 101 ist umgekehrt zu der jeweiligen Aufbaurichtung A vorgesehen. Die Ventilkäfige umfassen mehrere große, fensterartige Drosselkanäle 19. Die Form dieser Drosselkanäle 19 kann wie oben in Bezug auf Figur 6 beschrieben gebildet sein. Bei den Ventilkäfigen 101 in den Figuren 8 und 10 sind die Vielzahl weiterer, kleinerer Drosselkanäle 11 über einen tropfenförmigen Querschnitt wie in Bezug auf die Figuren 1 und 2 beschrieben gebildet.

Der in Figur 9 abgebildete Ventilkäfig 101 unterscheidet sich vom in Figur 1 dargestellten Ventilkäfig 101 im Wesentlichen nur durch die Form der rautenartigen Drosselkanäle 17. Durch die rautenartige Kanalgeometrie der Drosselkanäle 17 lässt sich eine besonders große Durchströmungsfläche durch den Ventilkäfig 101 im gesamten Umfangsbereich des zylinderhülsenförmigen Drosselkörpers 1 einstellen. Die geringste Stegbreite s zwischen den Drosselkanälen 17 kann, mit Ausnahme der abgerundeten Bereiche, am Giebel 3 sowie dem Grund 9, den Übergängen zwischen den Neigungsflächen, und den Überhangflächen 5, 6, entlang der gesamten Überhangflächen 5 und 6 und den dazu unmittelbar benachbarten Neigungsflächen benachbarter Drosselkanäle 17 eingestellt werden. Auf diese Weise lassen sich große gedrosselte Volumenströme realisieren.

Während bei den in Figur 9 wie auch in den anderen Darstellungen dargestellten Drosselkörpern im Wesentlichen gleichmäßige Verteilungen der Drosselkanäle entlang der radialen Innenseite wie auch der radialen Außenseite des Ventilkäfigs 101 vorgesehen sind, sei klar, dass am den Fenstern 19 gegenüberliegenden Ende bloß eine verringerte Anzahl einzelner Drosselkanäle 17, insbesondere nur ein einziger Drosselkanal 17, vorgesehen sein kann (nicht näher dargestellt). Es ist beispielsweise denkbar, dass in entgegengesetzt zur Aufbaurichtung A vorgesehener Hubrichtung V die Anzahl der Drosselkanäle 17 sich von Reihe zu Reihe zumindest in einem Eingangsbereich ändern kann, beispielsweise kann die in Hubrichtung V unterste Gruppe Drosselkanäle 17 eine geringere Anzahl an Drosselkanälen aufweisen als die danach folgende zweite Reihe, und die zweite Reihe kann eine geringere Anzahl an Drosselkanälen aufweisen als die darauffolgende dritte Reihe (nicht näher dargestellt).

Bei den Ausführungen gemäß Figuren 8 und 10 sind die Drosselkanäle 11 mit Austrittsradien versehen. Zudem haben beim erfindungsgemäßen Ventilkäfig 101 gemäß Figur 10 die Drosselkanäle 11 eine stufenartige Aufweitung sowohl am stromaufwärtigen Drosselkanaleintritt als auch am stromabwärtigen Drosselkanalaustritt.

Bei der in Figur 8 dargestellten Ausführung haben die Drosselkanäle 11 an der radialen Außenseite des hohlzylindrischen Ventilkäfigs 101 einen Austrittsradius, der einen Übergang zwischen der Innenseite des Kanals 11 und der Außenseite des Ventilkäfigs 101 bildet. Ebenso ist ein Austrittsradius R im Übergang zwischen der Innenseite des hohlzylindrischen Ventilkäfigs 101 und den Umfangsflächen des Drosselkanals 11 vorgesehen. Der Austrittsradius R entspricht wenigstens einem Zehntel der Drosselkanalbreite B. Vorzugsweise entspricht der Austrittsradius in etwa einem Sechstel der Drosselkanalbreite B. Insbesondere ist der Austrittsradius R nicht größer als die Drosselkanalbreite B.

Durch das Vorsehen von einem Austrittsradius bzw. Eintrittsradius am Übergang von einer Drosselkörper-Oberfläche zu den Drosselkanälen 11 (oder anders geformten Drosselkanälen, beispielsweise den oben beschriebenen dreieckigen Drosselkanälen 13, 15, den rautenförmigen Drosselkanälen 17 oder dem hausförmigen Drosselkanal 19). Mithilfe des Austrittsradius oder Eintrittsradius R lassen sich Einzeltöne wie Pfeifgeräusche einem Drosselkörper vermeiden und Verschleißerscheinungen beispielsweise infolge von Kavitation und Abrasion verringern. Entgegen eines gängigen Vorurteils kann selbst bei einer Vielzahl von wenigstens 10, wenigstens 20, wenigstens 50, wenigstens 100, wenigstens 200, wenigstens 500 oder wenigstens 1.000 Drosselkanälen in einem einzigen Drosselkörper eine wirtschaftliche Lebenszeitbetrachtung und eine wirtschaftliche Herstellung von Drosselkanälen mit Eintrittsradius oder Austrittsradius R realisiert werden.

Figur 10 zeigt eine erfindungsgemäße Ausführung von Drosselkanälen 17, die zusätzlich zu Eintrittsradien und Austrittsradien R jeweils mit einer Aufweitung 21, 23 versehen sind. Die Aufweitungen 21, 23 umgeben die Drosselkanäle (hier exemplarisch 11) kragenartig im Bereich des stromaufwärtigen Drosselkanaleintritts und im Bereich des stromabwärtigen Drosselkanalaustritts.

Vorzugweise sind, wie in Figur 11 abgebildet, an der Innenseite des Ventilkäfigs 101 die Drosselkanäle 11, vorzugsweise alle, mit einer Aufweitung 21 versehen. In Bezug auf den (hier linearen) Kanalverlauf setzen sich die Aufweitungen 21 (bzw. 23) mit größerer Querschnittsbreite fort. Die Aufweitung 21 und 23 ist wenigstens um die Größe des Austrittsradius R im Verhältnis zu dem Querschnitt des Drosselkanals 11 vergrößert. Die Länge der Aufweitung der Drosselkanäle 11 in Verlaufsrichtung der Drosselkanäle 11 ist wenigstens so groß wie der Austrittsradius R des Drosselkanals 11.

Die Aufweitungen setzen sich vom Ende des Drosselkanals 11 in stromaufwärtiger Richtung bzw. stromabwärtiger Richtung stufenartig fort. Die Verwendung von Aufweitungen kann insbesondere die Erzeugung von Tönen am Drosselkörper 1 noch weiter verringern. Es kann bevorzugt sein, dass eine Aufweitung nur an einer stromaufwärtigen Oberfläche und/oder einer radialen Innenseite eines Drosselkörpers vorgesehen ist. Eine radialinnenseitige Aufweitung 21 kann eine kürzere Länge aufweisen als eine radialaußenseitige Aufweitung 23 desselben Drosselkanals 11. Die Herstellung von Drosselkörpern, deren Drosselkanäle insbesondere an einer innenseitigen Umfangsfläche eines hohlzylindrischen Ventilkäfigs 101 Aufweitungen aufweisen, kann auch dann von Vorteil sein, wenn eine spanende Nachbearbeitung der Innenseite, beispielsweise falls besonders enge Toleranzen zwischen der Innenseite des Ventilkäfigs 101 und einem Außenumfang eines Stellgießers 103 gewünscht sind.

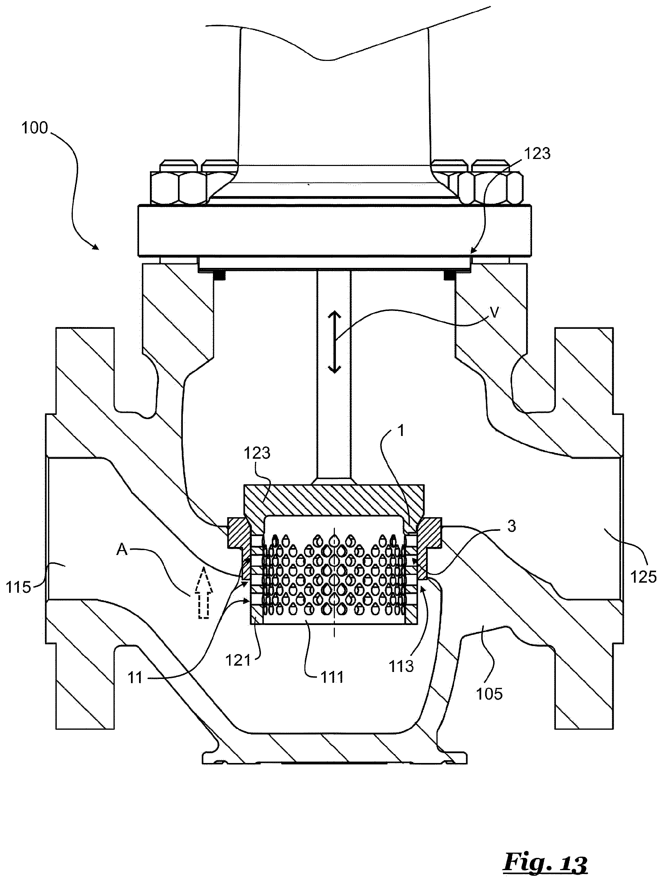

Für das in Figur 13 dargestellte Stellventil 100 gilt im Wesentlichen das gleiche wie für das oben in Bezug auf Figur 1 beschrieben Stellventil 100, sodass auf die obige Beschreibung verwiesen wird. Ein Unterschied zwischen den beiden Ausführungsformen besteht im Wesentlichen nur darin, dass der erfindungsgemäße Drosselkörper 111 als Ventilkolben realisiert ist, der mit einem Ventilsitz, hier ohne Ventilkäfig, kooperiert. Der Ventilkolben 111 kann wie Abgebildet in Form eines Lochkegels mit einer hülsenförmigen Umfangswand 121 und einer tellerförmigen Basis 123 gebildet sein. Die Umfangswand 121 ist mit den Drosselkanälen 11 durchsetzt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHEN:

- 1: Drosselkörper
- 3: Giebelbogen
- 5,7: Überhangfläche
- 6: Fläche
- 9: Grund
- 11, 13, 15, 17, 19: Drosselkanal
- 21, 23: Aufweitung
- 31: Giebelspitze
- 91: niedrigste Stelle
- 100: Stellventil
- 101: Ventilkäfig
- 103: Hubkolben
- 105: Ventilgehäuse
- 107: Gehäusedeckel
- 113: Durchgangsöffnung
- 115: Prozessfluideingang
- 123: Betätigungsöffnung
- 125: Prozessfluidausgang

- A: Aufbaurichtung
- H: Drosselkanalhöhe
- B: Drosselkanalbreite
- R: Austrittsradius
- b, b₁, b₂: Bogenteilbreite
- h_{b}, h_{b1}, h_{b2}: Bogenhöhe
- hₛ, hₛ₁, hₛ₂: Schenkelhöhe
- lₛ, lₛ₁, lₛ₂: Schenkellänge
- w: Bogenweite
- r: Bogenradius
- s: Stegbreite

- α: Überhangwinkel
- β: Bogenwinkel
- δ: rechter Winkel
- ε, ε₁, ε₂: Bogenteilwinkel

## Patentansprüche

1. Drosselkörper (1) zum Reduzieren des Fluiddrucks, insbesondere an einem Stellventil (100), vorzugsweise zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen, umfassend mehrere sich von einem stromaufwärtigen Drosselkanaleintritt zu einem stromabwärtigen Drosselkanalaustritt verlaufende Drosselkanäle (11, 13, 15, 17, 19), die jeweils umfassen:
einen sich von einem stromaufwärtigen Drosselkanaleintritt zu einem stromabwärtigen Drosselkanalaustritt erstreckenden Drosselkanalverlauf,
wobei der Drosselkörper (1) eine Aufbaurichtung (A), aufweist, in welcher der Drosselkörper (1) schichtweise additiv gebildet ist,
wobei die mehreren Drosselkanäle (11, 13, 15, 17, 19) an ihrem stromaufwärtigen Drosselkanaleintritt und an ihrem stromabwärtigen Drosselkanalaustritt einen Austrittsradius aufweisen, **dadurch gekennzeichnet, dass** der Drosselkanal (11, 13, 15, 17, 19) einen, insbesondere kontinuierlichen und/oder konstanten, Drosselkanalquerschnitt aufweist, der einen Giebelbogen (3) und wenigstens eine an den Giebelbogen (3) unmittelbar anschließende Überhangfläche (5, 7) aufweist, wobei die mehreren Drosselkanäle (11, 13, 15, 17, 19) an ihrem stromaufwärtigen Drosselkanaleintritt und an ihrem stromabwärtigen Drosselkanalaustritt eine den Austrittsradius umgebende, insbesondere stufenartige, Aufweitung und dass der Überhangwinkel (α) der Überhangfläche (5, 7) einen Winkelschwellwert von höchstens 75° nicht überschreitet, wobei jeder Drosselkanal (11, 13, 15, 17, 19) eine Drosselkanalbreite (B) quer, insbesondere senkrecht, zur Aufbaurichtung (A) aufweist und wobei der Giebelbogen (3) eine Bogenweite (w) im Bereich von 5% bis 30%, insbesondere 10% bis 20%, vorzugsweise 15±2 %, der Drosselkanalbreite (B) definiert,
und dass die Aufweitung in Drosselkanalverlaufsrichtung wenigstens so lang ist wie der Austrittsradius und/oder dass die Aufweitung wenigstens so breit ist wie der ihr zugeordnete Drosselkanal und dessen Austrittsradius.

2. Drosselkörper (1) nach Anspruch 1, **dadurch gekennzeichnet, dass** die Bogenweite im Bereich 0,1 mm bis 5 mm liegt, insbesondere im Bereich 0,15 mm bis 4 mm, vorzugsweise im Bereich 0,5 mm bis 2 mm, und/oder dass die Drosselkanalbreite wenigstens 0,5 mm, insbesondere wenigstens 1,0 mm, vorzugsweise wenigstens 2 mm, und/oder nicht mehr als 50 mm, insbesondere nicht mehr als 30 mm, vorzugsweise nicht mehr als 20 mm misst.

3. Drosselkörper (1) nach Anspruch 1 oder 2 , **dadurch gekennzeichnet, dass** der Winkelschwellwert größer ist als 45°, insbesondere größer als 50°, vorzugsweise größer als 60°.

4. Drosselkörper (1) nach einem der vorstehenden Ansprüche, **gekennzeichnet durch** eine zur Überhangfläche (5, 7) gegenüberliegende, an den Giebelbogen (3) anschließende, überhangfreie Steigungsfläche, insbesondere zur Aufbaurichtung (A) parallele Vertikalfläche (6),
wobei insbesondere die Bogenhöhe (h_{b}, h_{b1}, h_{b2}) kleiner ist als ein Drittel einer maximalen Drosselkanalhöhe (H) des Drosselkanals (11, 13, 15, 17, 19) korrespondierend, insbesondere parallel, zur Aufbaurichtung (A), und/oder dass ein durch den Giebel (3) definierter Bogenwinkel (β) wenigstens 30° und/oder nicht mehr als 160° beträgt, und/oder dass der Bogenwinkel (β) bestimmt ist als eine Hälfte des Überhangwinkels (α)
wobei insbesondere der Giebel einen Bogenradius (r) definiert, der kleiner ist als eine Schenkellänge (lₛ, lₛ₁, lₛ₂) einer links und/oder rechts an den Giebel angrenzenden Fläche (5, 6, 7), wobei insbesondere der Bogenradius (r) im Bereich 0,05 mm bis 10 mm liegt, insbesondere im Bereich 0,1 mm bis 5 mm liegt, vorzugsweise im Bereich 0,15 mm bis 4 mm; und/oder dass eine Teilbogenlänge (b, b₁, b₂) links oder rechts der Giebelspitze (31) kleiner ist als die Schenkellänge(lₛ, lₛ₁, lₛ₂) , insbesondere kleiner als Schenkelhöhe (hₛ, hₛ₁, hₛ₂), der daran anschließenden Fläche (5, 6, 7)
wobei insbesondere der Drosselkanal (11, 13, 15, 17, 19) einen, insbesondere kontinuierlichen und/oder konstanten, Drosselkanalquerschnitt aufweist, der im in Aufbaurichtung (A) oberen Bereich konvex geformt und durch wenigstens eine schräge Überhangfläche (5, 7) begrenzt ist und im in Aufbaurichtung unteren Bereich durch eine die Drosselkanalbreite (B) überspannende konkave, insbesondere bogenförmige oder durch schräge Flächen gebildete, Rinne geformt ist.

5. Drosselkörper (1) nach einem der vorstehenden Ansprüche, **gekennzeichnet durch** zwei gegenüberliegende, spiegelsymmetrisch an den Giebelbogen (3) anschließende Überhangflächen (5, 7), und/oder dass der Drosselkanal (11, 13, 15, 17, 19) als Querschnittsform eine Tropfenform, Dreiecksfrom, Wabenform, Rautenform, Polyederform oder ähnliches aufweist.

6. Drosselkörper (1) nach einem der vorstehenden Ansprüche, **dadurch gekennzeichnet, dass** die mehreren Drosselkanäle (11, 13, 15, 17, 19) einen gekrümmten, insbesondere raumspiralförmig gekrümmten, Verlauf aufweisen.

7. Drosselkörper (1) nach einem der vorstehenden Ansprüche, **dadurch gekennzeichnet, dass** alle Überhangflächen (5, 7) einen Überhangwinkel (α) kleiner oder gleich dem Winkelschwellwert aufweisen.

8. Drosselkörper (1) nach einem der vorstehenden Ansprüche, **dadurch gekennzeichnet, dass** der Drosselkörper (3) ein Metallmaterial umfasst oder daraus besteht, insbesondere eine Stahllegierung, vorzugsweise umfassend wenigstens einen Legierungsbestandteil aus der Gruppe bestehend aus Cr, Ni, Mo, Nb und Ti, und/oder dass die mehreren Drosselkanäle (11, 13, 15, 17, 19), insbesondere der Drosselkörper (3), frei von spanend bearbeiteten Abschnitten ist.

9. Drosselkörper (1) nach einem der vorstehenden Ansprüche, **dadurch gekennzeichnet, dass** die mehreren Drosselkanäle (11, 13, 15, 17, 19), mehrere Paare benachbarter Drosselkanäle mit unterschiedlichem, paarweise spiegelsymmetrischem Kanalquerschnitten aufweisen.

10. Ventilkäfig (101) oder Ventilkolben (111) für ein Stellventil (100) zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen, umfassend einen oder bestehend aus einem Zylinderhülsenförmigen Drosselkörper (1), nach einem der vorstehenden Ansprüche, wobei der zylinderhülsenförmige Drosselkörper (1) eine Hubachse (V) definiert und schichtweise additiv in einer Aufbaurichtung (A) gebildet ist,
**gekennzeichnet, durch** wenigstens einen ersten und wenigstens einen zweiten in Richtung der Hubachse (V) benachbarte Drosselkanal (11, 13, 15, 17, 19), wobei ein oberer Bereich des ersten Drosselkanals (11, 13, 15, 17, 19) in Richtung der Hubachse (V) auf Höhe eines unteren Bereichs des zweiten Drosselkanals (11, 13, 15, 17, 19) angeordnet ist, wobei insbesondere die Giebelbögen (3) des ersten Drosselkanals (11, 13, 15, 17, 19) im Bereich der Drosselkanalhöhe (H), vorzugsweise der Rinne, des zweiten Drosselkanals (11, 13, 15, 17, 19) angeordnet ist.

11. Ventilkäfig (101) für ein Stellventil (100) zum Anordnen in einer Prozessfluidleitung einer prozesstechnischen Anlage, wie einer chemischen Anlage, insbesondere einer petrochemischen Anlage, einem Kraftwerk, einer Brauerei oder dergleichen, umfassend einen oder bestehend aus einem zylinderhülsenförmigen Drosselkörper (1) nach einem der vorstehenden Ansprüche, mit mehreren Drosselkanälen (11, 13, 15, 17, 19), wobei der zylinderhülsenförmige Drosselkörper (1) eine Hubachse (V) definiert und schichtweise additiv in einer Aufbaurichtung (A) gebildet ist, **dadurch gekennzeichnet, dass** ein geringster Abstand zweier beliebiger unmittelbar benachbarter Drosselkanäle (11, 13, 15, 17, 19) kleiner ist als eine Kanalbreite (B) und eine vorbestimmte Stegbreite (s), insbesondere 0,5 mm, vorzugsweise 1 mm, nicht unterschreitet.

12. Ventilkäfig (101) nach Anspruch 10 oder 11, **dadurch gekennzeichnet, dass** die Hubrichtung (H) zur Aufbaurichtung (A) korrespondiert, wobei insbesondere der Ventilkäfig in Bezug auf die Hubrichtung (H) eine Öffnungsorientierung und eine dazu entgegengesetzte Schließorientierung aufweist, die der Aufbaurichtung (A) entspricht.

13. Stellventil (100) zum Anordnen in einer Prozessfluidleitung, einer prozesstechnischen Anlage, wie einer chemischen Anlage, insbesondere einer petrochemischen Anlage, einem Kraftwerk, einer Brauerei oder dergleichen, mit einem Stellventilgehäuse **gekennzeichnet durch** einen darin in Hubrichtung (H) beweglichen Ventilkolben (111),
oder mit einem im Stellventilgehäuse in Hubrichtung (H) beweglichen Hubkolben (103) zum Einstellen einer Prozessfluidströmung, **gekennzeichnet durch** einen Ventilkäfig (101) nach Anspruch 10 oder 11, in dem der Hubkolben angeordnet, insbesondere geführt, ist.

## Claims

1. Throttle body (1) for reducing the fluid pressure, in particular on a control valve (100), preferably for arrangement in a process fluid line of a process engineering plant, such as a chemical plant, in particular a petrochemical plant, a power station, a brewery or the like, comprising a plurality of throttle channels (11, 13, 15, 17, 19) which run from an upstream throttle channel inlet to a downstream throttle channel outlet, each comprising:
a throttle channel profile extending from an upstream throttle channel inlet to a downstream throttle channel outlet,
wherein the throttle body (1) has a build-up direction (A) in which the throttle body (1) is additively formed in layers,
wherein the plurality of throttle channels (11, 13, 15, 17, 19) have an outlet radius at their upstream throttle channel inlet and at their downstream throttle channel outlet,
**characterized in that** the throttle channel (11, 13, 15, 17, 19) has an, in particular continuous and/or constant, throttle channel cross section which has a gable arch (3) and at least one overhang surface (5, 7) directly adjoining the gable arch (3), wherein the plurality of throttle channels (11, 13, 15, 17, 19) have, at their upstream throttle channel inlet and at their downstream throttle channel outlet, an, in particular step-like, widening surrounding the outlet radius, and **in that** the overhang angle (α) of the overhang surface (5, 7) does not exceed an angle threshold value of at most 75°, wherein each throttle channel (11, 13, 15, 17, 19) has a throttle channel width (B) transversely, in particular perpendicularly, to the build-up direction (A), and wherein the gable arch (3) defines an arc width (w) in the range from 5% to 30%, in particular 10% to 20%, preferably 15±2%, of the throttle channel width (B),
and **in that** the widening in the throttle channel profile direction is at least as long as the outlet radius and/or **in that** the widening is at least as wide as the throttle channel assigned to it and its outlet radius.

2. Throttle body (1) according to Claim 1, **characterized in that** the arc width lies in the range of 0.1 mm to 5 mm, in particular in the range of 0.15 mm to 4 mm, preferably in the range of 0.5 mm to 2 mm, and/or **in that** the throttle channel width measures at least 0.5 mm, in particular at least 1.0 mm, preferably at least 2 mm, and/or not more than 50 mm, in particular not more than 30 mm, preferably not more than 20 mm.

3. Throttle body (1) according to Claim 1 or 2, **characterized in that** the angle threshold value is greater than 45°, in particular greater than 50°, preferably greater than 60°.

4. Throttle body (1) according to one of the preceding claims, **characterized by** a vertical surface (6) which is opposite the overhang surface (5, 7), adjoins the gable arch (3) and is free of overhang, in particular parallel to the build-up direction (A),
wherein in particular the arc height (h_{b}, h_{b1}, h_{b2}) is smaller than one third of a maximum throttle channel height (H) of the throttle channel (11, 13, 15, 17, 19) correspondingly, in particular parallel, to the build-up direction (A), and/or in that an arc angle (β) defined by the gable (3) is at least 30° and/or not more than 160°, and/or in that the arc angle (β) is determined as one half of the overhang angle (α),
wherein in particular the gable defines an arc radius (r) which is smaller than a limb length (lₛ, lₛ₁, lₛ₂) of a surface (5, 6, 7) adjoining the gable to the left and/or right, wherein in particular the arc radius (r) lies in the range of 0.05 mm to 10 mm, in particular lies in the range of 0.1 mm to 5 mm, preferably in the range of 0.15 mm to 4 mm; and/or in that a partial arc length (b, b₁, b₂) to the left or right of the gable tip (31) is smaller than the limb length (lₛ, lₛ₁, lₛ₂), in particular smaller than the limb height (hₛ, hₛ₁, hₛ₂), of the adjoining surface (5, 6, 7),
wherein in particular the throttle channel (11, 13, 15, 17, 19) has an, in particular continuous and/or constant, throttle channel cross section which is formed convexly in the upper region in the build-up direction (A) and is delimited by at least one oblique overhang surface (5, 7) and is formed in the lower region in the build-up direction by a concave, in particular arcuate or formed by oblique surfaces, which spans the throttle channel width (B).

5. Throttle body (1) according to one of the preceding claims, **characterized by** two opposite overhang surfaces (5, 7) adjoining the gable arch (3) in mirror-symmetrical fashion, and/or in that the throttle channel (11, 13, 15, 17, 19) has, as cross-sectional shape, a drop shape, triangular shape, honeycomb shape, diamond shape, polyhedral shape or the like.

6. Throttle body (1) according to one of the preceding claims, **characterized in that** the plurality of throttle channels (11, 13, 15, 17, 19) have a curved, in particular spatially spiral-shaped, profile.

7. Throttle body (1) according to one of the preceding claims, **characterized in that** all overhang surfaces (5, 7) have an overhang angle (a) smaller than or equal to the angle threshold value.

8. Throttle body (1) according to one of the preceding claims, **characterized in that** the throttle body (3) comprises or consists of a metal material, in particular a steel alloy, preferably comprising at least one alloy constituent from the group consisting of Cr, Ni, Mo, Nb and Ti, and/or **in that** the plurality of throttle channels (11, 13, 15, 17, 19), in particular the throttle body (3), is free of machined sections.

9. Throttle body (1) according to one of the preceding claims, **characterized in that** the plurality of throttle channels (11, 13, 15, 17, 19) have a plurality of pairs of adjacent throttle channels with different channel cross sections which are mirror-symmetrical in pairs.

10. Valve cage (101) or valve piston (111) for a control valve (100) for arrangement in a process fluid line of a process engineering plant, such as a chemical plant, in particular a petrochemical plant, a power station, a brewery or the like, comprising or consisting of a cylinder-sleeve-shaped throttle body (1) according to one of the preceding claims, wherein the cylinder-sleeve-shaped throttle body (1) defines a stroke axis (V) and is additively formed in layers in a build-up direction (A),
**characterized by** at least one first and at least one second throttle channel (11, 13, 15, 17, 19) adjacent in the direction of the stroke axis (V), wherein an upper region of the first throttle channel (11, 13, 15, 17, 19) is arranged in the direction of the stroke axis (V) at the level of a lower region of the second throttle channel (11, 13, 15, 17, 19), wherein in particular the gable arcs (3) of the first throttle channel (11, 13, 15, 17, 19) are arranged in the region of the throttle channel height (H), preferably the channel, of the second throttle channel (11, 13, 15, 17, 19).

11. Valve cage (101) for a control valve (100) for arrangement in a process fluid line of a process engineering plant, such as a chemical plant, in particular a petrochemical plant, a power station, a brewery or the like, comprising or consisting of a cylinder-sleeve-shaped throttle body (1) according to one of the preceding claims, with a plurality of throttle channels (11, 13, 15, 17, 19), wherein the cylinder-sleeve-shaped throttle body (1) defines a stroke axis (V) and is additively formed in layers in a build-up direction (A), **characterized in that** a smallest distance between any two directly adjacent throttle channels (11, 13, 15, 17, 19) is smaller than a channel width (B) and does not fall below a predetermined web width (s), in particular 0.5 mm, preferably 1 mm.

12. Valve cage (101) according to Claim 10 or 11, **characterized in that** the stroke direction (H) corresponds to the build-up direction (A), wherein in particular the valve cage has an opening orientation with respect to the stroke direction (H) and a closing orientation opposite thereto, which corresponds to the build-up direction (A).

13. Control valve (100) for arrangement in a process fluid line of a process engineering plant, such as a chemical plant, in particular a petrochemical plant, a power station, a brewery or the like, with a control valve housing, **characterized by** a valve piston (111) which is movable therein in the stroke direction (H),
or with a reciprocating piston (103) which is movable in the control valve housing in the stroke direction (H) for setting a process fluid flow, **characterized by** a valve cage (101) according to Claim 10 or 11, in which the reciprocating piston is arranged, in particular guided.

## Revendications

1. Corps d'étranglement (1), destiné à réduire la pression d'un fluide, notamment sur une vanne de régulation (100), à placer de préférence dans une conduite de fluide de procédé d'une installation industrielle de procédés, telle qu'une installation chimique, notamment une installation pétrochimique, une centrale électrique, une brasserie ou similaire, comprenant plusieurs canaux d'étranglement (11, 13, 15, 17, 19), s'écoulant d'une entrée de canal d'étranglement en amont vers une sortie de canal d'étranglement en aval, comprenant chacun :
un trajet de canal d'étranglement, s'étendant d'une entrée de canal d'étranglement en amont vers une sortie de canal d'étranglement en aval, le corps d'étranglement (1) présentant une direction de construction (A), dans laquelle le corps d'étranglement (1) est constitué couche par couche, par procédé additif,
les plusieurs canaux d'étranglement (11, 13, 15, 17, 19) présentant sur leur entrée de canal d'étranglement en amont et sur leur sortie de canal d'étranglement en aval un rayon de sortie,
**caractérisé en ce que** le canal d'étranglement (11, 13, 15, 17, 19) présente une section transversale de canal d'étranglement notamment continue et / ou constante, qui présente un arc de pignon (3) et au moins une surface en surplomb (5, 7) se raccordant directement sur l'arc de pignon (3), les plusieurs canaux d'étranglement (11, 13, 15, 17, 19) présentant sur leur entrée de canal d'étranglement en amont et sur leur sortie de canal d'étranglement en aval un élargissement notamment échelonné, entourant le rayon de sortie et **en ce que** l'angle de surplomb (α) de la surface en surplomb (5, 7) ne dépasse par une valeur angulaire seuil d'au plus 75°, chaque canal d'étranglement (11, 13, 15, 17, 19) présentant une largeur (B) du canal d'étranglement à la transversale, notamment à la perpendiculaire de la direction de construction (A) et l'arc de pignon (3) définissant une largeur (W) d'arc de l'ordre de 5 % à 30 %, notamment de 10 % à 20 %, de préférence de 15 ± 2 %, de la largeur (B) du canal d'étranglement,
et **en ce que** l'élargissement dans la direction du trajet du canal d'étranglement est au moins aussi long que le rayon de sortie et / ou **en ce que** l'élargissement est au moins aussi large que le canal d'étranglement qui lui est associé et son rayon de sortie.

2. Corps d'étranglement (1) selon la revendication 1, **caractérisé en ce que** la largeur d'arc se situe dans l'ordre de 0,1 mm à 5 mm, notamment dans l'ordre de 0,15 mm à 4 mm, de préférence dans l'ordre de 0,5 mm à 2 mm, et / ou **en ce que** la largeur du canal d'étranglement mesure au moins 0,5 mm, notamment au moins 1,0 mm, de préférence au moins 2 mm, et / ou pas plus de 50 mm, notamment pas plus de 30 mm, de préférence pas plus de 20 mm.

3. Corps d'étranglement (1) selon la revendication 1 ou 2, **caractérisé en ce que** la valeur angulaire seuil est supérieure à 45 °, notamment supérieure à 50°, de préférence supérieure à 60°.

4. Corps d'étranglement (1) selon l'une quelconque des revendications précédentes, **caractérisé par** une surface croissante exempte de surplomb, opposée à la surface en surplomb (5, 7), se raccordant sur l'arc de pignon (3), notamment une surface verticale (6) parallèle à la direction de construction (A),
notamment la hauteur d'arc (h_{b}, h_{b1}, h_{b2}) étant inférieure à un tiers d'une hauteur (H) maximale de canal d'étranglement du canal d'étranglement (11, 13, 15, 17, 19) correspondant, notamment à la parallèle, de la direction de construction (A), et / ou en ce qu'un angle d'arc (ß) défini par le pignon (3) est d'au moins 30 ° et / ou de pas plus de 160 °, et / ou en ce que l'angle d'arc (ß) est déterminé comme une moitié de l'angle de surplomb (α),
notamment le pignon définissant un rayon d'arc (τ) qui est inférieur à une longueur de branche (lₛ, lₛ₁, lₛ₂) d'une surface (5, 6, 7) adjacente à gauche et / ou à droite au pignon, notamment le rayon d'arc (τ) se situant dans l'ordre de 0,05 mm à 10 mm, se situant notamment dans l'ordre de 0,1 mm à 5 mm, de préférence dans l'ordre de 0,15 mm à 4 mm ; et / ou en ce qu'une longueur partielle (b, b₁, b₂) d'arc, à gauche ou à droite de la pointe (31) du pignon est inférieure à la longueur de branche (lₛ, lₛ₁, lₛ₂), notamment inférieure à la hauteur de branche (hₛ, hₛ₁, hₛ₂) de la surface (5, 6, 7) qui s'y raccorde,
notamment le canal d'étranglement (11, 13, 15, 17, 19) présentant une section transversale de canal d'étranglement notamment continue et / ou constante, qui est formée de manière convexe dans la zone supérieure dans la direction de construction (A) et étant délimité par au moins une surface en surplomb (5, 7) oblique et dans la zone inférieure dans la direction de construction, étant formé par une gorge concave, enjambant la largeur (B) du canal d'étranglement, notamment de forme curviligne ou constituée par des surfaces obliques.

5. Corps d'étranglement (1) selon l'une quelconque des revendications précédentes, **caractérisé par** deux surfaces en surplomb (5, 7) opposées, se raccordant en symétrie spéculaire sur l'arc de pignon (3) et / ou en ce que le canal d'étranglement (11, 13, 15, 17, 19) présente en tant que forme de section transversale une forme de goutte, une forme triangulaire, une forme alvéolaire, une forme losangique, une forme polyédrique ou analogue.

6. Corps d'étranglement (1) selon l'une quelconque des revendications précédentes, **caractérisé en ce que** les plusieurs canaux d'étranglement (11, 13, 15, 17, 19) présentent un trajet courbe, notamment un trajet courbe en forme de spirale spatiale.

7. Corps d'étranglement (1) selon l'une quelconque des revendications précédentes, **caractérisé en ce que** toutes les surfaces en surplomb (5, 7) présentent un angle de surplomb (α) inférieur ou égal à la valeur angulaire seuil.

8. Corps d'étranglement (1) selon l'une quelconque des revendications précédentes, **caractérisé en ce que** le corps d'étranglement (3) comprend une matière métallique ou est constitué de celle-ci, notamment un alliage d'acier, de préférence comprenant au moins un composant d'alliage du groupe constitué de Cr, Ni, Mo, Nb et Ti, et / ou **en ce que** les plusieurs canaux d'étranglement (11, 13, 15, 17, 19), notamment le corps d'étranglement (3) sont exempts de parties usinées par enlèvement de matière.

9. Corps d'étranglement (1) selon l'une quelconque des revendications précédentes, **caractérisé en ce que** les plusieurs canaux d'étranglement (11, 13, 15, 17, 19), présentent plusieurs paires de canaux d'étranglement voisins, avec différentes sections transversales de canaux en symétrie spéculaire par paires.

10. Cage de vanne (101) ou piston de vanne (111) pour une vanne de régulation (100), à placer dans une conduite de fluide de procédé d'une installation industrielle de procédés, telle qu'une installation chimique, notamment une installation pétrochimique, une centrale électrique, une brasserie ou similaire, comprenant un ou constituée d'un corps d'étranglement (1) en forme de manchon cylindrique selon l'une quelconque des revendications précédentes, le corps d'étranglement (1) en forme de manchon cylindrique définissant un axe de course (V) et étant constitué couche par couche, par procédé additif dans une direction de construction (A),
**caractérisée par** au moins premier et au moins un deuxième canal d'étranglement (11, 13, 15, 17, 19) voisin dans la direction de l'axe de course (V), une zone supérieure du premier canal d'étranglement (11, 13, 15, 17, 19) étant placée dans la direction de l'axe de course (V) à une hauteur d'une zone inférieure du deuxième canal d'étranglement (11, 13, 15, 17, 19), notamment les arcs de pignon (3) du premier canal d'étranglement (11, 13, 15, 17, 19) étant placés dans la zone de la hauteur (H) du canal d'étranglement, de préférence de la gorge du deuxième canal d'étranglement (11, 13, 15, 17, 19).

11. Cage de vanne (101) pour une vanne de régulation (100), à placer dans une conduite de fluide de procédé d'une installation industrielle de procédés, telle qu'une installation chimique, notamment une installation pétrochimique, une centrale électrique, une brasserie ou similaire, comprenant un ou constituée d'un corps d'étranglement (1) en forme de manchon cylindrique selon l'une quelconque des revendications précédentes, doté de plusieurs canaux d'étranglement (11, 13, 15, 17, 19), le corps d'étranglement (1) en forme de manchon cylindrique définissant un axe de course (V) et étant constitué couche par couche, par procédé additif dans une direction de construction (A), **caractérisée en ce qu'**un écart le plus faible entre deux canaux d'étranglement (11, 13, 15, 17, 19) quelconques, directement voisins est inférieur à une largeur (B) de canal et ne dépasse pas une largeur de nervure (s), notamment de 0,5 mm, de préférence de 1 mm.

12. Cage de vanne (101) selon la revendication 10 ou 11, **caractérisée en ce que** la direction de course (H) correspond à la direction de construction (A), notamment la cage de vanne présentant en rapport à la direction de course (H) une orientation d'ouverture et une orientation de fermeture opposée à celle-ci, qui correspond à la direction de construction (A).

13. Vanne de régulation (100) à placer dans une conduite de fluide de procédé d'une installation industrielle de procédés, telle qu'une installation chimique, notamment une installation pétrochimique, une centrale électrique, une brasserie ou similaire, dotée d'un corps de vanne de régulation, **caractérisée par** un piston de vanne (111) déplaçable dans celui-ci, dans la direction de course (H),
ou dotée d'un piston de course (103) déplaçable dans le corps de vanne de régulation, dans la direction de course (H), pour régler un écoulement d'un fluide de processus, **caractérisée par** une cage de vanne (101) selon la revendication 10 ou 11, dans laquelle le piston de course est placé, notamment guidé.
